# DEMANDE DE BREVET EUROPEEN

(11) **EP 1 968 060 A1**
(43) Date de publication de la demande: **10.09.2008**
(21) Numéro de dépôt: 08152416.7
(22) Date de dépôt: 06.03.2008
(51) Int. Cl.: G11B 20/00

(54) **Conteneur portable pour stocker au moins un objet multimédia, dispositifs de chargement et d'adaptation pour recevoir ce conteneur, système et procédés associés**

(30) Priorité: 09.03.2007 FR 0701748
(71) Demandeur: Archos, 91430 Igny (FR)
(72) Inventeur: Gilbert, Jérôme, 92300 Levallois-Perret (FR)
(74) Mandataire: Pontet, Bernard

(57) **Abrégé**

Conteneur portable multimédia comprenant :
- des moyens pour recevoir un ou plusieurs contenus multimédia provenant d'un dispositif de chargement,
- des moyens pour stocker des contenus multimédia ainsi reçus et
- des moyens pour exploiter de manière directe ou indirecte ces contenus ainsi stockés.

Système pour transporter des contenus multimédia depuis un site fournisseur vers un site de consommation, comprenant :
- en un point de chargement associé audit site fournisseur, un dispositif de chargement prévu pour recevoir un conteneur portable multimédia et pour charger dans ce conteneur portable au moins un contenu multimédia,
- en un point de restitution associé au site de consommation, un dispositif d'adaptation prévu pour être connecté au conteneur portable préalablement chargé et pour exploiter ce contenu multimédia.

## Description

La présente invention concerne un conteneur portable pour stocker au moins un objet multimédia. Elle vise également des dispositifs de chargement et d'adaptation pour recevoir de tels conteneurs portables et y charger ou restituer des contenus multimédia, ainsi qu'un système et procédé pour transporter des contenus multimédia mettant en oeuvre des conteneurs portables selon l'invention, et des applications de ce procédé.

On entend par objet multimédia tout contenu numérique représentant une entité ou une pluralité d'entités associées à du son de toute nature, par exemple de la musique, de la parole, des ambiances sonores, des images fixes ou animées pouvant ou non être accompagnées d'une ou plusieurs bandes son, de la vidéo plus ou moins enrichie par exemple accompagnée d'au moins une bande son et possiblement de sous-titres, du texte tels que des journaux, des magazines, des revues et des livres, des contenus programmatiques de toute nature tels que par exemple des jeux ou des applications informatiques, des contenus dans lesquels l'utilisateur peut naviguer en particulier mais pas exclusivement par l'intermédiaire de liens hypertextes.
La distribution des objets multimédia tels que la musique et la vidéo a longtemps été réalisée par l'intermédiaire d'un support physique cassette, disques de toute nature tels que DVD etc.

Le développement des réseaux de communication, l'augmentation des débits des connexions proposées au grand public conjointement avec la numérisation et la dématérialisation des oeuvres de l'esprit est de nature à favoriser l'essor du téléchargement en général. Ce modèle de consommation a parfaitement fonctionné pour la musique mais le téléchargement de la vidéo à la demande ne se développe pas au même rythme. Il existe une multiplicité de micro barrières qui peuvent expliquer ce décollage lent de la VOD (Vidéo à la demande) entièrement dématérialisée. Par exemple la gestion des droits et la protection anti copie illicite a nécessité des moyens techniques et organisationnels complexes à mettre en oeuvre et qui ne sont pas exempts d'inconvénients pour tout ou partie de la chaîne de valeur. Une bonne qualité de service suppose des connexions à très haut débit réel jusqu'à l'utilisateur final et de telles performances ne sont pas encore disponibles de manière homogène sur des territoires étendus et dans tous les pays. En outre la clientèle potentielle pour la location ou l'acquisition de vidéos est plus nombreuse et plus diversifiée que celle concernée par le téléchargement de la musique. La population concernée demande des moyens simples et efficaces tant au niveau de la mise en oeuvre technique que de la mise à disposition et des modèles économiques associés.

On connaît des solutions de distribution d'objets multimédia par l'intermédiaire de supports à durée de vie contrôlée tels que des DVD dont le contenu s'altère physiquement au bout d'un temps donné d'exposition à l'air.

On connaît également la mise à disposition de vidéos par l'intermédiaire de supports tels que les DVD et ses successeurs tels que « Blue Ray » ou HD DVD en cours d'introduction pour offrir des contenus en haute définition. Ces supports sont offerts à la vente mais en ce qui concerne la vidéo, la demande porte essentiellement sur la location. Mis à part les collectionneurs qui stockent les oeuvres ou les jeunes enfants qui les visionnent plusieurs fois de suite, le grand public en général souhaite visionner une seule fois l'oeuvre et au moindre coût. Pour répondre à cette demande il existe des réseaux de magasin de locations dans les villes que complètent des distributeurs automatiques ouverts sur la voie publique, installés de manière autonome ou associées aux boutiques pour leur permettre d'offrir un service 24 heures sur 24.

Néanmoins l'offre de location sur support physique en boutique ou distributeur automatique n'est pas pleinement satisfaisante en ce que le nombre de copies disponibles pour les nouveautés est toujours insuffisant pour répondre pleinement à la demande, en particulier pendant la période allant du vendredi soir au dimanche soir. En outre l'offre sur support physique en location à l'état de l'art est associée à la contrainte pour l'utilisateur de ramener directement ou indirectement, les supports visionnés au point de location, dans les zones d'habitation peu dense, en particulier s'il est nécessaire pour l'utilisateur d'utiliser un véhicule, la contrainte du retour des supports est un frein à la fluidité de la circulation des supports et nécessite un investissement plus important en nombre de copies. Bien que soient proposées traditionnellement des incitations tarifaires pour que les clients ramènent rapidement les supports loués, les effets combinés des temps moyens pendant lequel les supports sont loués ainsi que la gestion de la pointe de demande au moment des sorties obligent les exploitants à trouver des compromis concernant le nombre de copies à acheter. Ce compromis est rarement satisfaisant car minimiser le nombre de copies engendre des pertes de locations qui ne vont pas toutes être différées et récupérées ultérieurement, en outre acheter trop de copies diminue la rentabilité du modèle économique. L'exploitant supporte en outre d'autres contraintes telles que le nettoyage et le remplacement des supports abîmés. Dans les méthodes à l'état de l'art pour la mise à disposition de vidéos par le biais de supports physiques dédiés des oeuvres, le client final doit ramener le ou les supports loués après visionnage. C'est une contrainte dont il se passerait volontiers surtout si le client n'a pas l'intention de profiter de ce retour pour choisir de nouvelles oeuvres.

Dans d'autres contextes, non marchands tel que celui de la mise à disposition du public d'oeuvres multimédia dans des médiathèques ou bibliothèques pour un temps limité pose le même problème d'évaluation du nombre de copies nécessaires pour répondre au besoin et remplir la mission tout en restant dans le cadre d'un budget déterminé.

On connaît aussi des solutions telles que décrites dans la demande de brevet publié sous le numéro US2007/0016530 pour distribuer des fichiers multimédia qui suppose des infrastructures lourdes et coûteuses à déployer.

De manière plus générale, même si les professionnels prédisent le caractère inéluctable du basculement à terme de la distribution des objets numériques multimédia, dont la vidéo, jusqu'au consommateur final sous une forme à la demande, par l'intermédiaire de réseaux de communication, ce basculement n'est pas possible dans un futur proche partout et/ou dans tous les pays. Les solutions utilisant les réseaux nécessitent un débit important et relativement constant jusqu'à l'installation du client final. En outre, le développement massif de la VOD par l'intermédiaire des réseaux de communication nécessite le recours à des solutions de paiement dématérialisé or même lorsque des services de paiement dématérialisé sécurisé existent, une part significative de la clientèle potentielle y est réfractaire. De plus, certains pays comme l'Allemagne sont connus pour être culturellement peu enclins aux solutions de paiement sans support monétaire.

Par ailleurs, dans un contexte d'évolution rapide de l'électronique grand public, en particulier des téléviseurs, vers des capacités de reproduction de contenus numériques à haute définition, le besoin de bande passante s'est encore accru et repousse dans le temps le moment ou des solutions entièrement dématérialisées pourront répondre pleinement à la demande sur tous les territoires.

L'invention vise à résoudre au moins en partie les problèmes associés aux solutions existantes dont une partie a été décrite précédemment pour mieux satisfaire les demandes de mise à disposition de contenus multimédia pour un temps limité et ceci dans de meilleures conditions économiques d'exploitation. Les avantages potentiels de l'invention pour l'utilisateur final sont essentiellement la disponibilité permanente de tous les contenus accessibles, la possibilité de bénéficier simplement et sans surcoût de contenus à haute définition sur des téléviseurs « HD ready » désormais courants et ceci sans avoir à remplacer ses équipements de lecture ou de réception. En outre, dans certaines variantes de mise en oeuvre, l'invention dispense le client de revenir au point de location après visionnage.

L'invention peut être considérée à juste titre comme une forme de VOD reposant sur l'utilisation d'un dispositif de transport physique des contenus. Cette forme de VOD présente en outre un certain nombre d'avantages qui lui sont propres par rapport à la VOD utilisant les réseaux de communication en particulier la possibilité de proposer des qualités d'image et/ou de son supérieures sans remettre en cause des dimensionnements d'infrastructure. Il est à noter que le dispositif de transport physique des contenus selon l'invention ne concerne que dernier maillon de la chaîne logistique entre le point de chargement de proximité et le lieu de consommation. Les points de chargement peuvent avantageusement utiliser massivement les réseaux de communication pour l'acquisition des contenus demandés auprès de leurs détenteurs. En outre, la VOD selon l'invention présente des avantages spécifiques en matière de promotion des ventes pour les exploitants qui seront abordés plus loin dans la description. Ces avantages en font une solution potentiellement plus durable qu'une simple solution de transition entre la diffusion des contenus multimédia par support physique et leur diffusion par les réseaux de communication. De plus, des modèles économiques pérennes équilibrant durablement la satisfaction de l'offre et de la demande peuvent y être associés.

Le système selon l'invention repose sur un dispositif de stockage sécurisé d'au moins une partie de contenus multimédia numériques tel que de la musique, des vidéos, des photos, des oeuvres écrites ou parlées ou encore des oeuvres numériques intégrant tout ou partie des catégories principales précédentes. Un stockage sécurisé au sens de l'invention signifie que l'information ne peut être exploitée qu'à partir du dispositif de stockage sécurisé lui-même.

Ce dispositif de stockage sécurisé est physiquement chargé en contenus et droits associés en un lieu dit point de chargement et ces contenus sont exploités en un autre lieu dit point de consommation.

Le point de chargement peut être un dispositif d'accueil approprié disposant de moyens autonomes pour assurer le chargement des contenus ou ce peut être un dispositif périphérique d'un ordinateur. Les opérations de sélection des contenus et/ou de validation des droits et/ou de chargement des contenus peuvent être en tout ou partie automatisées ou confiées à un opérateur. Le point de chargement peut avantageusement être raccordé à un réseau de communication pour par exemple augmenter la quantité d'objets multimédia accessibles au-delà de celle qui est stockée dans la mémoire locale du dispositif. Le raccordement à un réseau est également avantageux pour assurer la gestion d'un compte client et/ou des droits associés de manière indépendante du point de chargement physique utilisé. Le point de chargement selon l'invention peut prendre avantageusement la forme d'une borne pouvant inclure des moyens de paiement et une interface utilisateur permettant un chargement en libre service. Les moyens de paiement peuvent être utilisés pour payer la location selon le modèle économique en vigueur.

Le dispositif de stockage selon l'invention est sécurisé. C'est indispensable pour empêcher la dissémination incontrôlée des oeuvres, notamment via Internet et leur copie illicite et plus généralement la spoliation des intérêts des ayants droit de tous ordres.

A minima, le dispositif de stockage est constitué de mémoire de masse par exemple à disque dur, à mémoire flash ou utilisant tout autre moyen technique de stockage de données en volume. Le dispositif de stockage, stockant avantageusement au moins une partie des données sous forme cryptée, contient en outre au moins un identifiant inaltérable au moins en partie unique et/ou au moins une clé de cryptage pour décrypter des contenus, n'autorisant l'exploitation ultérieure des contenus stockés qu'à partir de ce dispositif unique. Ainsi une copie à l'identique sur un autre support n'est pas exploitable à partir de cet autre support. Le dispositif de stockage sécurisé selon l'invention comprend au moins un canal de communication permettant le chargement des contenus et des droits associés. Il est possible aussi de stocker l'information de manière non cryptée dans le dispositif de stockage si les interfaces avec l'extérieur ne permettent pas la copie des informations. Ceci est possible en intégrant les moyens de décodage dans le dispositif pour que seul un flux décodé puisse en sortir. Des moyens complémentaires de protection du flux sortant, analogique et/ou numérique comme ceux que propose par exemple la société Macrovision peuvent être ajouté pour rendre le signal sortant non enregistrable par des moyens externes standards. Des moyens mécaniques pourront être avantageusement utilisés pour rendre indémontable le dispositif sans outillage spécial. Des solutions électriques et/ou électroniques internes non-standards pourront également avantageusement être utilisées pour rendre inaccessibles les contenus par des moyens usuels. Le dispositif de stockage comprend également des moyens pour assurer son alimentation en énergie, au moins un canal de sortie et un canal de commande pour permettre l'exploitation du contenu stocké au point de consommation. Tout ou partie des moyens mis en oeuvre pour faire communiquer le dispositif de stockage sécurisé avec son environnement extérieur peuvent être séparés ou confondus au sein d'une même interface composite.
Par exemple on peut faire communiquer le dispositif avec l'extérieur au moyen d'un connecteur unique comprenant des circuits pour charger les contenus et/ou les droits associés, d'autres pour les lire, les circuits pour alimenter le dispositif en énergie et le canal de commande.

La communication du dispositif de stockage avec l'extérieur peut également utiliser des moyens séparés comme par exemple un canal de communication à très haut débit, par exemple utilisant une liaison optique, pour assurer un chargement le plus rapide possible et réduire ainsi l'attente du l'utilisateur pendant cette phase. Le chargement des informations annexes telles que par exemple les licences associées aux oeuvres, les paramètres fixant les conditions d'utilisations peuvent avantageusement utiliser un canal auxiliaire utilisant des moyens plus courants de nature électrique tels qu'USB, Firewire ou de nature optique. Les besoins en débit étant notablement plus faibles que pour le canal de chargement de contenu principal, des solutions à faible coût reprenant par exemple tout ou partie des composants logiciels et/ou matériels associés au standard IrDa peuvent convenir. Des solutions de communication sans fil basée sur des l'utilisation des champs électromagnétiques peuvent convenir également.

Les interfaces entre le dispositif de stockage et les moyens de chargement doivent être robustes sur les plans mécanique et électrique. Les solutions mises en oeuvre doivent également éviter que la communication soit altérée ou interrompue prématurément. Pour atteindre cet objectif qui conditionne la qualité du service, il est particulièrement avantageux de bloquer mécaniquement l'arrimage du dispositif de stockage au moyen de chargement correspondant ou encore d'empêcher d'y accéder par exemple par enfermement pendant la phase de chargement.

La diminution du temps de chargement améliore en outre la rentabilité du point de chargement en augmentant le nombre d'utilisateurs/clients par unité de temps qui peuvent être servis. Le transfert des droits associés au oeuvres stockées et/ou ceux associés aux conditions d'utilisation concédées au client/utilisateur par le fournisseur du service peut transiter par l'intermédiaire d'un bus de liaison séparé sans sortir du cadre de l'invention. Ce bus séparé peut d'ailleurs utiliser des contacts qui lui sont propres au sein d'un connecteur composite. L'alimentation électrique peut provenir d'un ou plusieurs bus de données standards utilisés pour réaliser l'interface et qui intègrent des alimentations, par exemple USB ou IEEE1394. L'alimentation du dispositif peut aussi utiliser des contacts supplémentaires externes aux connecteurs utilisés pour la transmission de données ou encore se faire par induction entre le socle ou encore une face quelconque de l'appareil et un inducteur en vis-à-vis solidaire du bâti du point de chargement.

Le raccordement des signaux électriques et/ou optiques du dispositif de stockage au point de chargement peut se faire au moyen d'un ou de plusieurs connecteurs solidaires d'une paroi du dispositif de chargement que complètent avantageusement des moyens mécaniques ou électromécaniques pour assurer un arrimage stable des deux dispositifs pour au moins obtenir une communication fiable à travers l'interface et/ou des moyens pour prévenir toute préhension susceptible d'altérer la communication pendant la phase de chargement. Le raccordement peut se faire aussi au moyen d'un connecteur qui peut être composite, c'est-à-dire comprenant une pluralité d'interfaces physiques rassemblées au sein d'un même sous-ensemble mécanique solidaire d'un câble comme dans le cas du point de chargement. L'avantage de cette dernière variante de mise en oeuvre étant de permettre une adaptation à différents modèles de dispositif de stockage dont seule la connectique, au moins celle concernant le point de chargement, reste invariante. Selon un autre mode de mise en oeuvre, une pluralité de variantes de moyens de connexion peut être proposée au point de chargement pour pouvoir offrir le service de chargement de contenu dans l'hypothèse de l'existence d'une pluralité de modèles de connecteurs. Cette pluralité de formats de connecteurs peut être offerte tant dans la variante dans laquelle le ou les connecteurs sont solidaires d'une paroi du dispositif de chargement ou dans la variante dans laquelle les connecteurs sont solidaires d'un ou de plusieurs câbles.

Dans un mode de réalisation avantageux, le dispositif de stockage sécurisé selon l'invention comprend en outre des moyens de décryptage et/ou de décodage des contenus numériques ainsi qu'au moins une interface standard pour une exploitation simple au point de consommation au moyen d'un équipement standard du marché. Pour la vidéo une interface HDMI permettra de transmettre l'image et le son au téléviseur en qualité numérique et avec la résolution la mieux adaptée, une sortie péritel offrira la compatibilité avec les parcs de téléviseurs plus anciens. Des sorties additionnelles vidéo analogique composite, en composantes séparées ou encore SVHS accompagnées de sorties audio analogique et/ou numérique élargiront les possibilités de connexion aux équipements de restitution externes tels que téléviseur, vidéoprojecteur, installation dite « home-cinéma ». Dans le cas de contenus multimédias destinés à être exploités au moyen d'un ordinateur, au moins une liaison de transmission de données selon les standards en vigueur en informatique pourra être proposée. Il peut s'agir par exemple d'une liaison USB, Firewire (IEEE1394), Ethernet, SCSI, Sata externe etc. ou encore une connectivité en point à point ou réseau par des moyens sans fils standards tels que wifi etc.

Une des caractéristiques essentielle de l'invention est la non dissémination des contenus protégés. Ce principe reste valable même dans le cas d'un raccordement du dispositif de stockage à un ordinateur. Les contenus ne peuvent être exploités qu'en lecture directe dans la mémoire du dispositif de stockage selon l'invention. Toute copie ou clonage des données sur des moyens de stockage extérieurs au dispositif est impossible ou dans le cas où elle est physiquement possible, les données copiées sont inexploitables. Il est cependant possible dans le cadre de cette invention d'utiliser au moins une partie de l'espace de stockage du dispositif pour des contenus numériques non protégés. Il peut s'agir de contenus libres de droits dans le cadre du système selon l'invention que l'utilisateur peut copier s'il le souhaite, il peut s'agir également de tout autre contenu auquel les contraintes de protection ne s'appliquent pas. Ce peut être par exemple des enregistrements vidéo issus d'un caméscope numérique que l'utilisateur souhaite stocker temporairement, il peut s'agir également de photographies numériques issues d'un appareil photo numérique dont la mémoire est saturée etc.

Les commandes permettent au moins de choisir les objets multimédia et d'offrir à l'utilisateur les commandes classiques en la matière. Ces commandes peuvent être par exemple celles que l'on trouve habituellement sur des lecteurs audio ou vidéo telles que : lecture, objet suivant, objet précédent, lecture accélérée en avant ou en arrière, pause etc., ces commandes de base peuvent être complétées par des commandes comme le choix de la langue, l'incrustation de sous-titres, la visualisation des droits associés aux oeuvres et/ou au compte client etc. Les commandes peuvent avantageusement être proposées et/ou dupliquées par des moyens sans fil infrarouge ou radio présentant une ergonomie la plus proche possible de ce qui se fait couramment dans l'univers des produits audio et/ou vidéo. Le récepteur de télécommande peut être situé au sein du dispositif de stockage selon l'invention. Pour des raisons de minimisation du coût du dispositif de stockage portable, le récepteur de télécommande pourra être localisé dans la base d'accueil résidant au point de consommation.

Dans un mode de mise en oeuvre particulièrement avantageux, le raccordement du dispositif de stockage aux autres appareils du point de consommation est réalisé par l'intermédiaire d'une base d'accueil assurant au moins la transmission des signaux entre le ou les connecteurs équipant le dispositif de stockage et les câbles reliés aux équipement sédentaires pour offrir à l'utilisateur une connexion/déconnexion aisée mettant en oeuvre des connecteur aptes à résister à de nombreux cycles de connexion/déconnexion, si possible en une seule opération. Le raccordement des signaux électriques et/ou optiques du dispositif de stockage à la base d'accueil peut se faire au moyen d'un ou de plusieurs connecteurs solidaires d'une paroi du dispositif d'accueil que complètent avantageusement des moyens mécaniques ou électromécanique pour assurer un arrimage stable des deux dispositifs pour au moins obtenir une communication fiable à travers l'interface. Le raccordement peut se faire aussi au moyen d'un connecteur qui peut être composite, c'est-à-dire comprenant une pluralité d'interfaces physiques rassemblées au sein d'un même sous-ensemble mécanique solidaire d'un câble comme dans le cas du point de chargement. L'avantage de cette dernière variante de mise en oeuvre étant de permettre une adaptation à différents modèles de dispositif de stockage dont seule la connectique, au moins celle concernant le point de consommation reste invariante.

La liaison entre le dispositif de stockage et les dispositifs avec lesquels il doit coopérer peut également s'envisager par l'utilisation de moyens sans fils. Il est par exemple possible d'utiliser des moyens optiques et/ou utilisant des champs électriques et/ou magnétiques pour la communication entre les dispositifs. En outre il est également possible d'alimenter le dispositif de stockage par induction au moyen d'inducteurs placés en vis-à-vis derrière des parois. Il est ainsi possible de mettre en oeuvre le conteneur portable selon l'invention sous une forme exempte de connecteurs et éventuellement étanche si nécessaire.

Cela étant, dans une version minimale, le dispositif d'adaptation entre le dispositif de stockage selon l'invention et un ou plusieurs équipements standards de restitution tel qu'un téléviseur et/ou un équipement de restitution audio peut n'être qu'un ou plusieurs câbles.

Plusieurs variantes de mise en oeuvre équivalentes sont possibles dans lesquelles des sous-ensembles fonctionnels peuvent être placés indifféremment dans le dispositif de stockage ou dans l'adaptateur sédentaire au point de consommation. Il peut s'agir par exemple des moyens de décodage et/ou de l'horloge temps réelle sécurisée utilisable pour la gestion des droits et/ou des éventuels moyens de conversion et/ou d'adaptation d'interface.

Dans le cas de certaines applications particulières, le dispositif d'adaptation peut en outre inclure des moyens de visualisation et/ou d'écoute et/ou des moyens de stockage et/ou de décodage correspondant à un premier niveau de service de base à accès éventuellement inconditionnel ainsi que des moyens d'alimentation électrique autonomes et/ou par connexion à une source d'énergie extérieure, par voie filaire ou par induction. Par exemple dans le cadre de la mise en oeuvre de l'invention dans des avions, des trains, des bus, des bateaux, des automobiles, le dispositif d'adaptation peut comprendre un écran, des moyens pour raccorder des écouteurs, des moyens locaux pour délivrer des contenus inclus dans un premier niveau de service en accès libre, par exemple des consignes de sécurités, de la communication, de la publicité, des programmes pour donner envie d'accéder aux services plus riches nécessitant la présence du dispositif de stockage selon l'invention. Ces contenus pouvant être pré chargés dans une mémoire de masse locale incluse dans le dispositif d'adaptation et/ou stockés à l'extérieur du dispositif d'adaptation auxquels il accède par une connexion à un réseau. Avantageusement dans ce contexte de mise en oeuvre, le dispositif d'adaptation proposera par exemple à l'utilisateur, en l'absence du dispositif de stockage selon l'invention, la consultation des consignes de sécurité, du catalogue de l'offre de produits proposée en duty free, de publicité, de magazines, du catalogue des vidéos et/ou des programmes musicaux et/ou tout autres contenus numériques proposés dans le cadre de la mise à disposition du dispositif de stockage selon l'invention.

Dans la plupart des modes d'exploitation liés à la fourniture récurrente de contenus pour un temps déterminé à un utilisateur quel que soit sont statut client, abonné, ou sociétaire, il est associé de manière biunivoque à un compte. Ce compte pouvant être individuel ou collectif. La gestion du compte nécessite une identification de l'utilisateur et une association entre le contenu et l'utilisateur et le cas échéant les droits associés et/ou le dispositif physique qui les contient. Avantageusement le dispositif selon l'invention inclut des moyens pour associer contenus et utilisateur, au moins pour le temps d'une session de chargement/restitution. Ces moyens peuvent par exemple reposer sur l'inscription de données d'identification utilisateur dans la mémoire du dispositif recevant les contenus.

Ces données peuvent également avantageusement être directement incluses dans les fichiers de contenus. Ceci peut se faire simplement sous forme de tags inclus dans les fichiers en tant que métadonnées. De manière plus sophistiquée pour plus de sécurité vis-à-vis de fraudes éventuelles, l'inclusion des références du client dans les fichiers peut se faire par des techniques de filigrane électronique (watermarking en anglais). Si la gestion du compte client repose sur l'identification d'un dispositif unique affecté à ce dernier alors cette identification peut inclure des données uniques attachées au dispositif. Cette identification dépendante du dispositif peut aussi reposer sur la lecture d'un code à barre uni ou multidimensionnel ou encore sur une étiquette radiofréquence autonome (RF tag en anglais) ou encore sur la lecture d'une mémoire spécifique et non effaçable embarquée dans le dispositif de stockage.

Les moyens d'identification de l'utilisateur peuvent être avantageusement complétés par des moyens associés fonctionnellement à un acte de paiement ou d'imputation sur un compte. Lesdits moyens d'identification et de paiement pouvant être confondus ou différenciés selon le mode de gestion client / dispositif de stockage retenu.

Dans les mises en oeuvre de l'invention reposant sur la distribution de dispositifs de stockage selon l'invention comme par exemple dans les transports en commun et en particulier en l'absence de prise de caution en échange de l'appareil, il est particulièrement utile d'inclure des moyens antivols dans le dispositif de stockage. Ces moyens antivols peuvent par exemple reposer sur la détection d'un élément résonnant ou absorbant inclus dans le dispositif de stockage par des portiques placés aux accès selon les techniques à l'état de l'art utilisées dans les points de vente. Il peut s'agir aussi par exemple de moyens radiofréquence à très faible puissance embarqués dans le dispositif qui émettent régulièrement un signal d'identification et dont l'arrêt de la réception par éloignement ou masquage provoque une alarme.

Au delà de l'information fournie lors du chargement des contenus, il est prévu que l'utilisateur puisse aussi avoir connaissance des droits d'exploitation associés à chaque contenu stocké également au point de consommation. Les moyens utilisés pour restituer les objets stockés peuvent aussi être utilisés pour donner cette information en incrustation sur un contenu en cours d'exploitation ou par substitution temporaire du contenu. Dans une variante de mise en oeuvre avantageuse, l'information relative aux droits d'exploitation rappelle à l'utilisateur les droits initialement acquis lors du chargement, les droits résiduels à l'instant de la demande d'information et éventuellement des informations complémentaires indiquant par exemple une fin de droits programmée dans le temps indépendamment du nombre de restitutions ou d'autres conditions particulières.

La restitution des informations relatives aux droits peut par exemple avoir lieu sur demande explicite de l'utilisateur qui adresse la commande adéquate par l'intermédiaire par exemple d'une touche spécifique de la télécommande associée au système. Il peut s'agir aussi d'un affichage implicite d'au moins les informations relatives à un contenu lors du lancement de sa restitution.

Pour offrir de la souplesse supplémentaire aux utilisateurs et aux gestionnaires, l'invention peut avantageusement inclure des possibilités d'interaction entre l'utilisateur et le système sur le lieu de consommation. L'interactivité entre l'utilisateur et le système peut être nécessaire pour modifier les conditions de consommation prévues initialement lors du chargement, pour proposer d'autres oeuvres préchargées, en autoriser le décryptage et en imputer le coût de consommation le cas échéant. Il peut s'agir également de faire participer l'utilisateur à des sondages, lui soumettre des questionnaires etc. Il est prévu deux catégories principales d'interactivité, une interactivité en temps réel qui suppose l'accès à un réseau de communication et une interactivité en temps différé. L'interactivité en temps réel peut avantageusement utiliser le téléphone comme moyen d'accéder au système d'information du gestionnaire. C'est un moyen commode parce que faisant appel à des moyens banalisés, quasiment universellement répandus, dont l'ergonomie peut être adaptée à une utilisation par le grand public dans sa langue naturelle et que les terminaux sont désormais le plus souvent sans fil. L'exemple type pour libérer un contenu stocké dans le dispositif et imputer le coût correspondant sur son compte client consiste à saisir un ou plusieurs codes sur le clavier du téléphone, le serveur renvoyant un code unique de libération par synthèse vocale ou par SMS. Ce code de libération retourné par le système de gestion est entré par l'utilisateur dans le dispositif au moyen de la télécommande qui lui est associée.

Il est également possible d'équiper le dispositif de stockage ou le dispositif d'adaptation selon l'invention d'un capteur et des moyens de décodage pour recevoir et interpréter directement le code de libération pouvant être envoyés par le serveur sous la forme d'une suite de codes à fréquences vocales par exemple selon le standard dit DTMF. La mise en oeuvre de cette variante nécessite de plaquer l'écouteur du téléphone sur le capteur au moment opportun pour libérer la restitution du contenu souhaité. Bien entendu il est également possible d'utiliser d'autres liaisons sans fil existantes telles que Bluetooth ou IrDa entre le téléphone et le dispositif de stockage ou d'adaptation.

Un autre moyen externe de plus en plus répandu permettant d'apporter de l'interactivité à l'invention repose sur l'utilisation d'un dispositif externe à l'invention tel qu'un ordinateur ou un appareil électronique portable communicant, connectable à Internet et embarquant un navigateur ou une application permettant l'envoi et la réception de courriers électroniques. Comme dans le cas de l'utilisation du téléphone, le code de libération envoyé par le système de gestion peut avantageusement utiliser la télécommande associée au dispositif et/ou l'affichage sur le dispositif de restitution lorsqu'il s'agit de vidéo. L'interactivité en temps différé nécessite le retour du dispositif de stockage sur un point de chargement dont la plupart sont connecté au réseau par la nécessité d'acquérir les contenus ainsi qu'au système de gestion de l'exploitant.

Les potentialités fonctionnelles sont du même ordre que dans le cas des solutions temps réel. La différence principale entre les deux catégories d'interactivité est que la mise à jour des informations entre le dispositif de stockage et le système de gestion de l'exploitant se fait à posteriori, après l'acte de consommation le cas échéant, lors de la connexion suivante du dispositif à un point de chargement compatible. Cette caractéristique peut conduire l'exploitant à modifier tout ou partie des conditions de gestion par exemple en imputant à priori tous les contenus potentiellement libérables sur le compte du client et déduire les éventuelles non-consommations lors de la synchronisation des informations à la connexion suivante sur un point de chargement compatible.

Selon un autre aspect de l'invention, le dispositif de stockage sécurisé selon l'invention est un objet manipulé et transporté physiquement par des personnes et en particulier par l'utilisateur auquel il est attribué. Durant ces opérations, le dispositif est potentiellement exposé à la vue d'au moins le client/utilisateur ce qui fait de cet objet un excellent support potentiel de communication. Le dispositif de stockage comprend avantageusement des moyens de communication autonomes pour afficher des images sur au moins une de ses faces et/ou des moyens pour amener aux oreilles de l'utilisateur des contenus sonores. En effet, le mode de communication privilégié est le visuel mais des moyens embarqués pour diffuser des contenus audio peuvent compléter avantageusement voir éventuellement remplacer les moyens d'affichage.

Les moyens de communication visuelle peuvent être passifs comme par exemple des logements, rainures, fentes, fenêtres ou tout autres solution permettant de maintenir un support d'information imprimé sur papier, carton, matière plastique ou tout autre substrat. Il peut s'agir aussi de supports passifs réinscriptibles par des moyens résidants dans le point de chargement, par exemple des moyens électriques et/ou optiques reposant par exemple sur une ou plusieurs sources laser.

Les moyens de communication visuelle peuvent être semi-passifs ou actifs comme par exemple un ou plusieurs afficheurs à très faible consommation ou avantageusement bistables capable de conserver une image en l'absence d'alimentation électrique. On trouve dans cette catégorie par exemple des afficheurs à cristaux liquides de type cholestérique ou des supports réinscriptibles du type papier électronique ou encore des substrats bistables et réinscriptibles par des moyens optiques externes. Ces moyens de communication visuelle semi-passifs peuvent être pilotés par les moyens électroniques de contrôle du dispositif de stockage et avantageusement utiliser une partie de la mémoire embarquée pour permettre un affichage de plus d'une page d'informations tant que les ressources énergétiques autonomes éventuellement embarquées dans le dispositif le permettent. Un affichage d'informations visuelles statiques dont la quantité excède la capacité d'affichage de la surface de l'afficheur et les moyens de navigation associés pour explorer l'information proposée et/ou un affichage d'informations visuelles dynamique, d'images animées ou vidéo nécessite une source d'énergie embarquée dans le dispositif. Le besoin de fonctionnement en autonomie du dispositif de stockage pourra être limité sans que cette limitation nuise à sa fonction principale car la vocation du dispositif est d'être stockée au point de chargement ou au point de consommation, possiblement sur des supports fournissant une alimentation en énergie externe au dispositif de stockage et capable de charger d'éventuels moyens d'alimentation autonome.

Dans ces conditions, des moyens embarqués n'ayant pas nécessairement une grande capacité de stockage en énergie mais capables d'un rechargement très rapide comme par exemple des super-condensateurs pourraient convenir.

L'interface entre le système de contrôle des moyens d'affichage sur la surface externe du dispositif de stockage selon l'invention et les moyens d'inscription correspondant au point de chargement des contenus peuvent partager tout ou partie des mêmes moyens techniques embarqués dont les moyens d'interface et/ou d'alimentation le cas échéant. Les deux sous-systèmes peuvent également être intégralement découplés ayant chacun leur moyens de gestion et d'interface. Les moyens d'affichage et de stockage du dispositif peuvent être séparés jusqu'à leurs systèmes de chargement respectifs, le système d'information qui les sous-tend et même jusqu'au gestionnaire qui en ce qui concerne le système d'affichage peut être une régie publicitaire distincte de l'exploitant du dispositif.

Des moyens d'affichage embarqués dans le dispositif de stockage peuvent avantageusement occuper sur plus d'une face du boîtier. Il est ainsi possible avec un dispositif d'affichage autonome sur les deux surfaces principales d'un objet parallélépipédique de se rapprocher des marquages figurant sur les contenants habituels d'une oeuvre vidéo, musicale ou littéraire en se rapprochant respectivement d'un boîtier de DVD, d'une pochette de CD ou lorsqu'il s'agit d'un livre ou d'un magazine, les premières et dernière de couverture incluant qu'éventuellement les marquages sur la tranche.

Les informations communiquées par les moyens autonomes du dispositif de stockage peuvent correspondre à des annonces de sortie de nouveaux titres, à de la publicité en général. Dans le cas de l'utilisation du dispositif selon l'invention dans le cadre de la location de titres vidéo, les moyens d'affichages embarqués dans le dispositif de stockage peuvent avantageusement reproduire, de manière plus ou moins fidèle à l'original selon les capacités d'affichage, une ou plusieurs jaquettes associées aux titres chargés. De même si l'invention est utilisée dans le cadre de la distribution de contenus musicaux une ou plusieurs pochettes peuvent être reproduites au mieux des capacités

D'autres avantages et caractéristiques de l'invention apparaîtront à l'examen de la description détaillée d'un mode de mise en oeuvre nullement limitatif, et des dessins annexés sur lesquels :
- La figure 1 illustre les étapes principales du procédé selon l'invention ;
- La figure 2 illustre l'architecture interne du dispositif de stockage selon l'invention et la multiplicité des données qu'il est susceptible de stocker ;
- La figure 3 illustre des étapes optionnelles du procédé ;
- La figure 4 illustre une première variante d'interface avec les moyens de chargement du dispositif de stockage selon l'invention ;
- La figure 5 illustre une seconde variante d'interface avec les moyens de chargement du dispositif de stockage ;
- La figure 6 illustre une troisième variante d'interface avec les moyens de chargement du dispositif de stockage ;
- La figure 7 illustre une quatrième variante d'interface avec les moyens de chargement du dispositif de stockage ;
- La figure 8 illustre une variante de raccordement du dispositif de stockage selon l'invention ;
- La figure 9 illustre une seconde variante de raccordement du dispositif de stockage selon l'invention ;
- La figure 10 illustre une variante de point de chargement selon l'invention ;
- La figure 11 illustre une seconde variante de point de chargement ;
- La figure 12 illustre une troisième variante de point de chargement ;
- La figure 13 illustre une quatrième variante de point de chargement ;
- La figure 14 illustre une quatrième variante de point de chargement ;
- La figure 15 illustre une première variante du dispositif de stockage selon l'invention avec des interfaces pour les moyens de restitution et d'alimentation au point de consommation ;
- La figure 16 illustre une seconde variante du dispositif de stockage avec des interfaces pour les moyens de restitution et d'alimentation au point de consommation ;
- La figure 17 illustre un premier type de raccordement du dispositif de stockage avec des moyens de restitution et d'alimentation au point de consommation ;
- La figure 18 illustre un second type de raccordement du dispositif de stockage avec des moyens de restitution et d'alimentation au point de consommation ;
- La figure 19 illustre un troisième type de raccordement du dispositif de stockage avec des moyens de restitution et d'alimentation au point de consommation ;
- La figure 20 illustre un premier type d'interface utilisateur pouvant être mis en oeuvre pour le dispositif de stockage au point de consommation ;
- La figure 21 illustre un second type d'interface utilisateur pouvant être mis en oeuvre pour le dispositif de stockage au point de consommation ;
- La figure 22 illustre un troisième type d'interface utilisateur pouvant être mis en oeuvre pour le dispositif de stockage au point de consommation ;
- La figure 23 illustre une première méthode pour offrir à l'utilisateur la possibilité d'interagir avec le dispositif de stockage et/ou son compte client au point de consommation ;
- La figure 24 illustre une seconde méthode pour offrir à l'utilisateur la possibilité d'interagir avec le dispositif de stockage et/ou son compte client au point de consommation ;
- La figure 25 illustre une première variante de mise en oeuvre de moyens pour communiquer au moins visuellement avec l'utilisateur par l'utilisation d'au moins une paroi du dispositif de stockage ;
- La figure 26 illustre une seconde variante de mise en oeuvre de moyens pour communiquer au moins visuellement avec l'utilisateur par l'utilisation d'au moins une paroi du dispositif de stockage ;
- La figure 27 illustre une variante de moyens de mise à jour du contenu affiché sur au moins une paroi du dispositif de stockage ; et
- La figure 28 illustre une variante de moyens pour présenter du contenu sur au moins une paroi du dispositif de stockage, contenu qui excède les capacités de restitutions et qui nécessite des moyens de navigation.

### Description détaillée des figures

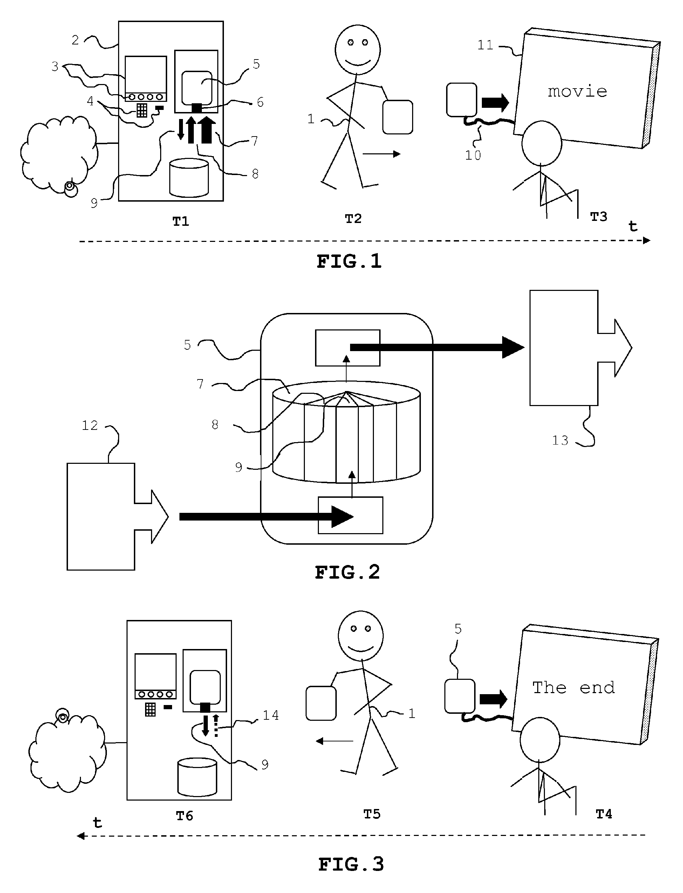

La figure 1 illustre les étapes principales du procédé selon l'invention. Dans un premier temps T1, un automate 2 ou une personne qui peut être ou non l'utilisateur final, charge un ou plusieurs contenus multimédia à un point de chargement prévu à cet effet. Le point de chargement peut être un équipement périphérique d'un terminal de point de vente, une borne autonome en libre service ou encore comme illustré dans la figure 1, un automate utilisable en libre service, possiblement multi support et/ou multiservice accessible depuis la voie publique. L'automate de chargement en libre service permettant à l'utilisateur d'effectuer tout ou partie des opérations suivantes :
- s'identifier de manière directe ou indirecte,
- sélectionner le ou les contenus numériques qu'il souhaite acquérir au sein du catalogue proposé par des moyens d'interface utilisateur 3 qui peuvent être par exemple un écran et un clavier ou un écran tacti le,
- Sélectionner les droits d'usages qu'il souhaite associer aux objets numériques à charger avec les moyens disponibles 3,
- valider ses choix,
- payer à l'acte, par imputation sur un compte client et/ou recharger un compte client par les moyens de paiement 4 proposés,
- procéder au chargement des données correspondantes 7 et des licences associées 8 le cas échéant dans le dispositif de stockage 5 par l'intermédiaire d'une interface appropriée 6.
- De manière silencieuse, c'est-à-dire sans que l'utilisateur en ait connaissance, le point de chargement peut charger dans le dispositif de stockage 5 des contenus promotionnels et/ou publicitaires avec ou sans des attributs définissant les conditions de visualisation comme par exemple l'empêchement du saut à un objet suivant, des annonces avec ou sans extraits des bonus, des contenus offerts dans le cadre d'un programme de fidélité, des contenus à accès conditionnels par exemple pouvant être proposés à l'utilisateur après qu'il ait consommé les oeuvres de son choix et éventuellement à des conditions avantageuses, des contenus en préchargement non exploitables avant une date programmée, la gestion de ce contenu se faisant localement grâce à une horloge temps réel embarquée dans le dispositif de stockage, des contenus produits par les utilisateurs eux-mêmes qui sont proposés aux autres utilisateurs dans le cadre de l'animation d'une communauté ou club d'utilisateurs, après contrôle éventuel de bienséance etc.,
- De manière silencieuse, le point de chargement peut extraire du dispositif de stockage des informations 9 liées aux consommations précédentes et à intégrer dans la gestion du compte client, ce peut être également des informations exploitables à des fins de mesure d'audience, de temps d'exposition à des objets identifiés, d'observation du mode de consommation incluant éventuellement des horodatages d'évènements liés à l'utilisation du dispositif et/ou des contenus etc.

Dans un deuxième temps T2 le dispositif de stockage est déplacé physiquement depuis un point de chargement jusqu'à un point de consommation. Le transport du dispositif peut être assuré ou non par l'utilisateur final sans sortir du cadre de l'invention. Cette opération peut par exemple être réalisée par un livreur spécialisé ou dans le cadre d'une prestation de service combiné tel qu'une livraison de repas accompagné d'une vidéo et/ou d'une musique d'ambiance pouvant être en tout ou partie en relation avec le type de nourriture livré. Par exemple il peut s'agir d'un concept de livraison de nourriture italienne + musique d'ambiance italienne + film italien qui peut être décliné selon les différentes cultures (française, chinoise, japonaise, indienne, étasunienne, canadienne, mexicaine etc.)

Dans un troisième temps T3 l'utilisateur 1 consomme au moins un contenu stocké dans le dispositif de stockage en le raccordant éventuellement par l'intermédiaire d'un équipement d'interface spécifique 10, à des moyens standards de restitution 11 tels que téléviseur, vidéo projecteur, « home cinema », chaîne hifi, moyens de rediffusion par radiofréquence dans la maison etc.

La figure 2 illustre les ressources internes principales du dispositif de stockage 5 selon l'invention et les catégories de données qu'il est susceptible de stocker. Outre les contenus 7 choisis par l'utilisateur parmi l'ensemble des objets numériques qui lui ont été proposés au point de chargement 12, d'autres informations peuvent être stockées par exemple des informations liées à la gestion des droits 8 associés aux oeuvres numériques chargées lorsque ces dernières sont protégées. Il peut s'agir de licences d'utilisation comprenant par exemple de clés de décryptage permettant au sous-ensemble de décodage et/ou de décryptage de restituer à l'extérieur du dispositif le contenu en clair au point de consommation 13, ces clés n'étant opérantes que pour les données stockées dans un dispositif unique donné. D'autres informations peuvent être stockées dans le dispositif, ces informations pouvant provenir de l'extérieur et tout ou partie d'entre elles pouvant être chargées dans le dispositif de stockage à l'occasion d'une connexion à un point de chargement. Il peut s'agit par exemple :
- de contenus promotionnels et/ou publicitaires,
- d'attributs définissant les conditions de visualisation de ces objets,
- des annonces de sorties de nouveautés,
- des extraits des nouveautés prochainement disponibles,
- des bonus,
- des contenus offerts dans le cadre d'un programme de fidélité,
- des contenus à accès conditionnels,
- des contenus en préchargement, non exploitables avant une date prédéterminée,
- des contenus produits par les utilisateurs eux-mêmes dans l'esprit « Youtube ».

D'autres informations 9 peuvent être stockées dans le dispositif, ces informations étant générées au sein du dispositif de stockage ou collectées par ce dernier. Tout ou partie d'entre elles peuvent être extraites du dispositif de stockage à l'occasion d'une connexion à un point de chargement. Il peut s'agit par exemple d'informations :
- liées aux consommations précédentes,
- exploitables à des fins de mesure d'audience,
- représentatives de temps d'exposition à des objets identifiés,
- d'observation du mode d'utilisation du dispositif,
- d'observation du mode de consommation des contenus,
- des évaluations selon un ou plusieurs critères,
- des résultats de sondage d'opinion,
- des réponses à des questions etc.

Pour optimiser l'utilisation des points de chargement et étaler les pointes de demandes à l'occasion de sorties médiatisées d'oeuvres de tous types, vidéo, musicale, littéraire etc., on précharge, éventuellement à l'insu de l'utilisateur, à la fin du chargement des objets explicitement demandés. Ce préchargement peut avantageusement être conditionné par la vérification préalable du fait que la capacité résiduelle de stockage du dispositif est suffisante. Le préchargement des objets multimédia proprement dit se fait conjointement avec les informations d'exploitation correspondantes permettant de rendre visible l'existence et/ou exploitable le contenu au sein du dispositif. Avantageusement les mécanismes de protection mis en oeuvre incluent la notion de date de mise à disposition du public qui est comparée dans le dispositif à la date issue de l'horloge temps réel embarquée. Une application spécifique peut être embarquée dans le dispositif de stockage, ou le cas échéant dans l'adaptateur assurant l'interface entre le dispositif et les moyens de restitution standards extérieurs à l'invention. Cette application propose à l'utilisateur par exemple une bande annonce en clair avec une invitation à consommer dès la date de disponibilité programmée. Dans le cadre de services marchands, cette consommation est assujettie à l'acceptation par le client du coût correspondant. Ceci peut se faire par une interaction en temps réel avec le système de gestion du compte client tel que décrit plus loin dans des exemples mettant en oeuvre un téléphone ou un ordinateur connecté à un réseau.

L'interaction entre l'utilisateur et le système de gestion de son compte peut aussi se faire en temps différé selon des modalités illustrées par l'exemple non limitatif qui suit. Le dispositif de stockage ou le cas échéant l'adaptateur assurant l'interface entre le dispositif et les moyens de restitution standards extérieurs à l'invention, surveille et enregistre des évènements liés à la consommation des objets multimédia stockés dans le dispositif. En environnement marchand, des règles définissent les conditions qui sont associées à la facturation, par exemple la restitution de plus de 10 pourcent de la durée d'une oeuvre, la restitution de plus d'une durée fixée à l'avance ou encore lors d'un réponse positive à la question « souhaitez-vous poursuivre la restitution de l'oeuvre » pour un prix donné au-delà d'une première période de gratuité sur les moyens de restitution, ou tout autre règle faisant partie des conditions de vente du prestataire, associe une information de consommation à l'objet multimédia concerné. Les règles peuvent en outre être plus ou moins forfaitaires, progressives en fonction du nombre de restitutions etc. Le fichier contenant ces informations de consommation, qui comprend notamment les références du client, les références des oeuvres consommées et les unités et/ou les sommes correspondantes à imputer met à jour le système de gestion du compte de ce client à l'occasion de chaque connexion à un point de chargement. Si le système selon l'invention est exploité par plusieurs opérateurs, l'information de consommation comprend en outre une sous information caractéristique de l'opérateur concerné par l'oeuvre consommée.

La figure 3 illustre des étapes optionnelles du procédé. Les étapes illustrées par la figure 1, qu'elles soient mises en oeuvre de manière directe ou indirecte, de manière explicite ou implicite sont essentielles dans le procédé selon l'invention. Un des avantages pour l'utilisateur par rapport aux solutions à l'état de l'art mettant en oeuvre un support physique est qu'en principe l'utilisateur n'a pas à ramener le support au point de livraison après consommation. Cela étant il peut être appréciable pour l'utilisateur d'avoir la possibilité de revenir au point de chargement pour modifier les conditions de consommations associées à chaque objet stocké dans le dispositif de stockage. Il peut s'agir par exemple de prolonger une durée d'activation d'une oeuvre ou d'augmenter un nombre de restitutions, il peut s'agir aussi à l'inverse de recréditer son compte client par annulation ou diminution de droits d'usages associés à des oeuvres précédemment chargées dont les conditions de consommation initialement choisies ou acceptée ont été révisées à la baisse. La figure 3 illustre la mise en oeuvre d'étapes optionnelles après consommation qui visent par exemple à modifier les conditions de consommations préalablement définies et in fine à procurer un avantage à l'utilisateur.

Il peut s'agir aussi d'introduire des données dans le système d'information de l'exploitant par exemple en participant à un sondage, une enquête un concours par exemple dans le cadre d'un programme de fidélisation ou d'animation commerciale pouvant conduire un avantage pour l'utilisateur. Dans la figure 3, après la consommation d'un objet stocké dans le dispositif 5 qu'illustre l'étape T4, l'utilisateur 1 ramène directement ou indirectement pendant l'étape T5 le dispositif de stockage au point de chargement initial ou à tout autre point de chargement compatible par exemple faisant partie du même réseau, pour être en capacité d'interagir de nouveau pendant l'étape T6 avec le système d'information de l'exploitant qui assure entre autre la gestion du compte du client sous tout ou partie de ses aspects et des droits relatifs aux oeuvres et/ou des autres fonctions du même ordre. L'interaction se matérialise au moins par une lecture d'informations 9 contenues dans le dispositif de stockage et le cas échéant d'une modification introduite par écriture d'une information 14 dans le dispositif. Il est à noter que l'étape T4 est optionnelle car il est prévu qu'avantageusement l'utilisateur puisse à tout moment revenir au contact du système de gestion pour par exemple modifier voir annuler les conditions de consommation même s'il n'a consommé aucun des objets multimédia qu'il a préalablement stockés dans le dispositif.

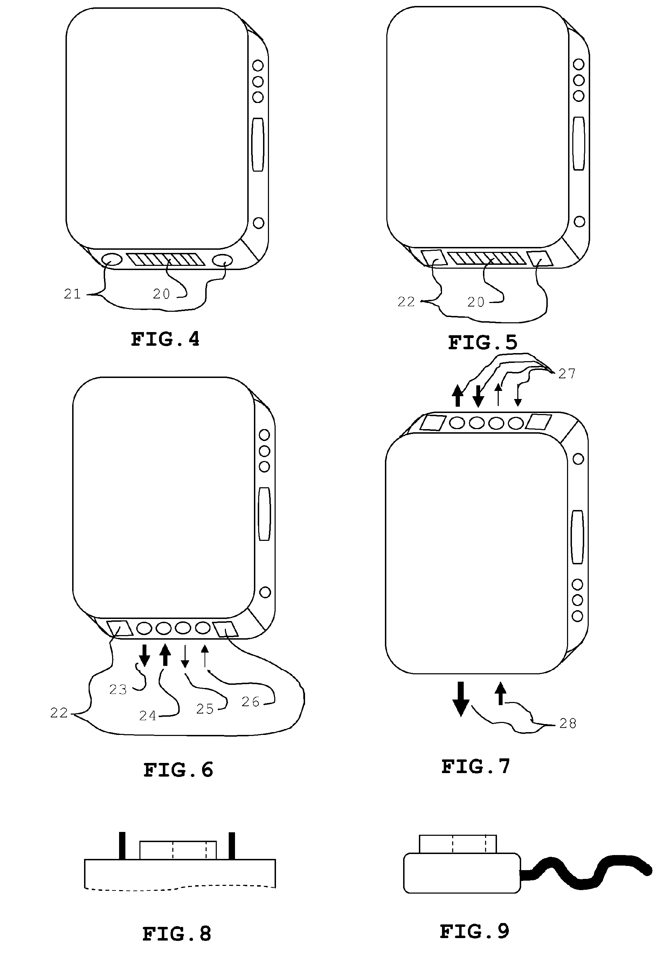

La figure 4 illustre une première variante d'interface avec les moyens de chargement du dispositif de stockage selon l'invention. L'interface physique permettant de réaliser l'ensemble des opérations caractéristiques du point de chargement est avantageusement agencée pour matérialiser l'ensemble des contacts électriques et/ou optiques en une seule action de la part de l'utilisateur, par exemple par un mouvement de translation mettant en contact les parties correspondantes solidaires du dispositif et celles solidaires du point de chargement. Dans cet exemple de mise en oeuvre, une pluralité de contacts électriques 20 solidaires du dispositif de stockage est agencée pour matérialiser une pluralité de liaisons électriques avec les contacts correspondants qui sont solidaires du point de chargement. Des moyens de guidage et/ou de maintient mécanique 21 des liaisons électriques en position établie peuvent être intégrée dans les connecteurs et/ou peuvent être intégrés dans le boîtier du dispositif. Ces fonctions de guidage et/ou de maintient peuvent également reposer sur la forme extérieure du boîtier et/ou sur la force de gravité.

La figure 5 illustre une seconde variante d'interface avec les moyens de chargement du dispositif de stockage selon l'invention. Dans cette variante, des contacts pour l'alimentation en énergie 22 du dispositif sont séparées des autres liaisons électriques 20 entre le dispositif de stockage et le point de chargement.

La figure 6 illustre une troisième variante d'interface avec les moyens de chargement du dispositif de stockage selon l'invention. Dans cette variante, des contacts pour l'alimentation en énergie 22 du dispositif sont séparées des autres liaisons entre le dispositif de stockage et le point de chargement. Lesdites autres liaisons sont dans cet exemple de mise en oeuvre de nature optique. Une seule liaison à haut débit dans chaque sens, point de chargement vers dispositif 24 et dispositif vers point de chargement 23 pourrait suffire en théorie mais en pratique il est plus simple de séparer la liaison à très haut débit destinée à transférer les gros volumes de données multimédia en un minimum de temps et la liaison destinée aux données auxiliaires 25, 26 telles que les licences associées aux objets protégés, les conditions de consommation, les données d'identification du dispositif, les statistiques d'usage etc. La figure 6 représente une liaison optique à haut débit bidirectionnelle 23, 24 une liaison de service à plus faible débit également bidirectionnelle 25, 26 et des contacts destinés à l'alimentation électrique du dispositif 22. On ne sort cependant pas du cadre de l'invention dans le cas d'une liaison à très haut débit dans le sens point de chargement vers dispositif et une liaison à plus faible débit dans le sens dispositif vers point de chargement. La combinaison entre une liaison unidirectionnelle à très haut débit et une liaison bidirectionnelle à plus faible débit comme par exemple utilisant des moyens initialement prévus dans le cadre du standard IrDa est également pertinente dans une démarche d'optimisation des coûts et des performance du système. Dans un tel cas les données sont transférées par blocs à très haut débit dans le dispositif et les commandes du protocole visant par exemple à demander l'envoi du bloc suivant ou à répéter l'envoi d'un bloc erroné peuvent utiliser la liaison auxiliaire à débit plus faible sans que les performances globales du système soient affectées de manière notable.

La figure 7 illustre une variante d'interface du dispositif de stockage avec les moyens de chargement et avec les moyens de restitution selon l'invention. Dans cet exemple de mise en oeuvre, le dispositif de stockage utilise deux de ses faces pour établir des liaisons avec des moyens extérieurs sensiblement dans un seul mouvement au point de chargement 27 et au point de consommation 28. Ainsi on facilite l'utilisation du dispositif de stockage tant au point de chargement qu'au point de restitution.

La figure 8 illustre une variante de moyens de connexion solidaires d'une paroi au point de chargement. Ces moyens sont possiblement composites à savoir comprenant au sein de mêmes moyens connectables et déconnectables sensiblement dans un même mouvement, au moins une interface électrique et/ou optique d'interface du dispositif de stockage avec les moyens de chargement et avec les moyens de restitution selon l'invention. Dans cet exemple de mise en oeuvre, le dispositif de stockage utilise deux de ses faces pour établir des liaisons avec des moyens extérieurs sensiblement dans un seul mouvement pour chaque liaison. Ainsi on facilite l'utilisation du dispositif de stockage tant au point de chargement qu'au point de restitution.

La figure 9 illustre une variante de moyens de connexion à l'extrémité d'un câble au point de chargement. Ces moyens sont possiblement composites à savoir comprenant au sein de mêmes moyens connectables et déconnectables sensiblement dans un même mouvement, au moins une interface électrique et/ou optique d'interface du dispositif de stockage avec les moyens de chargement et avec les moyens de restitution selon l'invention.

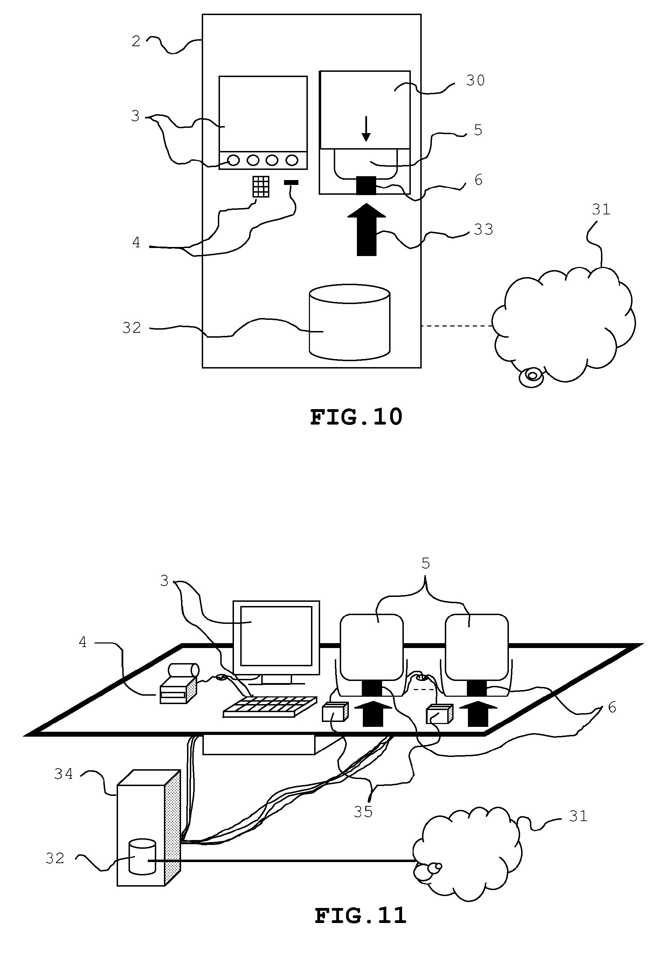

La figure 10 illustre une variante de mise en oeuvre de point de chargement selon l'invention. Il s'agit d'un automate 2 possiblement accessible 24 heures sur 24 depuis la voie publique. Des moyens d'interface 3 par exemple un écran tactile ou un écran et un clavier permettent à l'utilisateur de sélectionner les objets multimédia de son choix, de choisir les conditions de consommation associées à chaque objet dans le cas du chargement de plus d'un objet ou encore les conditions de consommation associées de manière globale à la session de chargement en cours. Compte tenu du volume de données que représentent tous les titres existants qui peuvent être demandés, en particulier lorsqu'il s'agit de contenus vidéo haute définition, il est quasiment impossible de stocker localement 32 tous les contenus dans un point de chargement. La situation la plus courante est celle d'une demande forte à l'intérieur d'un ensemble restreint de titres, par exemple les nouveautés du moment et les oeuvres dont on parle dans les médias que complètent des demandes sporadiques extrêmement variées.

L'architecture de système la mieux adaptée à cette situation repose sur un stockage local 32 des objets numériques multimédia les plus demandés et un accès à des banques de données de titres distantes au moyen d'au moins une connexion à haut débit à un réseau 31 pour répondre aux demandes ne pouvant être satisfaites par les moyens locaux. Un mécanisme de gestion de mémoire cache auto adaptatif peut avantageusement être mis en oeuvre pour assurer automatiquement la gestion des priorités dans l'attribution des capacités de stockage locales en fonction de la fréquence de la demande à l'intérieur d'une période d'observation donnée. Un point de chargement autonome peut comprendre avantageusement des moyens de paiement directs 4 reposant sur la lecture de cartes de crédit et/ou de monnaie. Il peut comprendre en outre ou à la place desdits moyens de payement directs, des moyens de paiement indirects par imputation sur un compte client identifié par correspondance avec le numéro d'identification unique du dispositif de stockage 5, par saisie d'un identifiant de client avec ou sans mot de passe, par lecture d'une carte spécifique etc.

Le point de chargement comprend avantageusement des moyens 30 pour empêcher toute manipulation du dispositif de stockage pendant les transferts d'information. En effet, les contacts électriques et/ou optiques transportant des informations à haut débit peuvent être sensibles aux mouvements mécaniques et aux vibrations (phénomènes dits de « pick-up »). En outre, les transferts de données volumineuses 33 pouvant comprendre plusieurs fichiers unitaires ainsi que des fichiers associés tels que des fichiers de licences, de conditions d'utilisations ou de métadonnées, ne peuvent pas être interrompus de manière inopinée sans mettre en péril la cohérence et/ou l'intégrité des données. Des moyens assurant le blocage et/ou l'impossibilité d'accès au dispositif de stockage pendant une session de chargement améliorent sensiblement la qualité du service rendu en ce qu'ils réduisent les risques de dysfonctionnements.

Un autre aspect de l'invention concerne l'interface physique 6 entre les moyens de chargement et le dispositif de stockage. Parmi les deux principaux types d'interface décrits précédemment, la solution d'un bloc de connexion à l'extrémité d'un câble offre l'avantage de pouvoir s'adapter à une plus grande variété de modèles de dispositifs de stockage. Il est encore plus avantageux de proposer une pluralité d'interfaces pour permettre l'adaptation à davantage de modèles de dispositifs de stockage au sein du même dispositif de chargement.

De manière particulièrement avantageuse, l'automate peut coexister avec des moyens de chargement selon l'invention avec des moyens pour distribuer et reprendre des DVD à l'état de l'art et/ou les standards de supports physiques qui vont lui succéder. Des ressources de l'automate telles que par exemple les moyens de paiement et/ou d'interaction avec l'utilisateur pourront être avantageusement partagés entre les moyens de chargement selon l'invention et les moyens de distribution de supports physiques.

Ainsi la transition entre les deux modes de distribution peut être gérée harmonieusement et étalée dans le temps. Les deux modes de distribution peuvent également coexister durablement si les parties prenantes y ont intérêt et que la distribution de contenus par l'intermédiaire de supports physiques est maintenue.

La figure 11 illustre une autre variante de mise en oeuvre de point de chargement selon l'invention. Il s'agit de l'équipement d'un point de vente. On retrouve les moyens classiques d'un point de vente en magasin 3,4,34 auxquelles s'ajoutent des spécificités pour la mise en oeuvre de l'invention. On trouve en particulier au moins une interface 6 pour charger le ou les contenus sélectionnés par l'utilisateur dans le dispositif selon l'invention 5. Comme déjà évoqué précédemment et pour les même raisons il est particulièrement recommandé et avantageux de mettre en oeuvre des moyens de blocage et/ou de verrouillage de l'accès au dispositif de stockage pendant sont chargement.

Dans cette variante, le dispositif de chargement proprement dit est mis en oeuvre sous la forme d'un périphérique 6 d'ordinateur raccordable à l'ordinateur 34 par des moyens standards directs tels que un ou plusieurs ports d'entrée/sortie tels qu'USB, FireWire etc. ou par des moyens standards indirects tels qu'une carte d'adaptation ayant un format mécanique et une interface avec l'ordinateur standard tel que PCI, PCI Express, PCMCIA etc. Des moyens d'alimentations externes peuvent compléter la connexion à l'ordinateur si nécessaire. Le périphérique coopère avec un logiciel applicatif et/ou un logiciel de bas niveau (driver) appropriés. Le périphérique de chargement peut en outre faire appel à des moyens applicatifs accessibles par un réseau de communication pour être exécutés à distance et/ou localement après téléchargement. Des lecteurs 35 de cartes ou de codes à barres et/ou d'étiquettes radiofréquence permettront une gestion automatique de la sélection des contenus en permettant à l'utilisateur de choisir dans le magasin l'oeuvre ou les oeuvres qu'il souhaite emprunter dont il amène le support promotionnel correspondant ou encore une étiquette associée au point de vente pour que les fichiers correspondants soient appelés automatiquement et chargés dans le dispositif de stockage sans avoir à rechercher et/ou à saisir une information. De manière particulièrement avantageuse le ou les lecteurs de carte ou d'identifiant physique analogue utilisés pour l'identification des titres choisis par l'utilisateur peuvent également permettre au système d'identifier l'utilisateur. L'uniformisation des moyens d'identification des objets multimédia chargeables dans le dispositif et des utilisateurs du service permet de simplifier et de fluidifier les actions au point de vente jusqu'à éventuellement les rendre accessible en libre service. Il est également possible sans sortir du cadre de l'invention d'identifier l'utilisateur par la reconnaissance d'informations biométriques telles que des empreintes digitales, des empreintes rétiniennes etc. Il est également proposé à l'utilisateur le cas échant de choisir le type de consommation de manière globale ou objet par objet. Il peut s'agir par exemple du choix du nombre de jours pendant lesquels l'oeuvre peut être consommée, du nombre de consommations par oeuvre etc. ces choix pouvant être associés à des montants différents facturés ou imputés sur le compte de l'utilisateur. Le point de vente est bien entendu doté de moyens pour réaliser des transactions économiques 4 dans le cadre de paiements à la consommation, au forfait, pour le rechargement d'un compte client etc. Comme dans le cas du point de chargement qu'illustre la figure 10, une gestion des contenus reposant sur un stockage local 32 et sur une capacité d'accès à des banques de données distantes par l'intermédiaire d'au moins une connexion à un réseau 31 permet d'optimiser les flux de données tout en offrant un accès à la totalité des contenus potentiels.

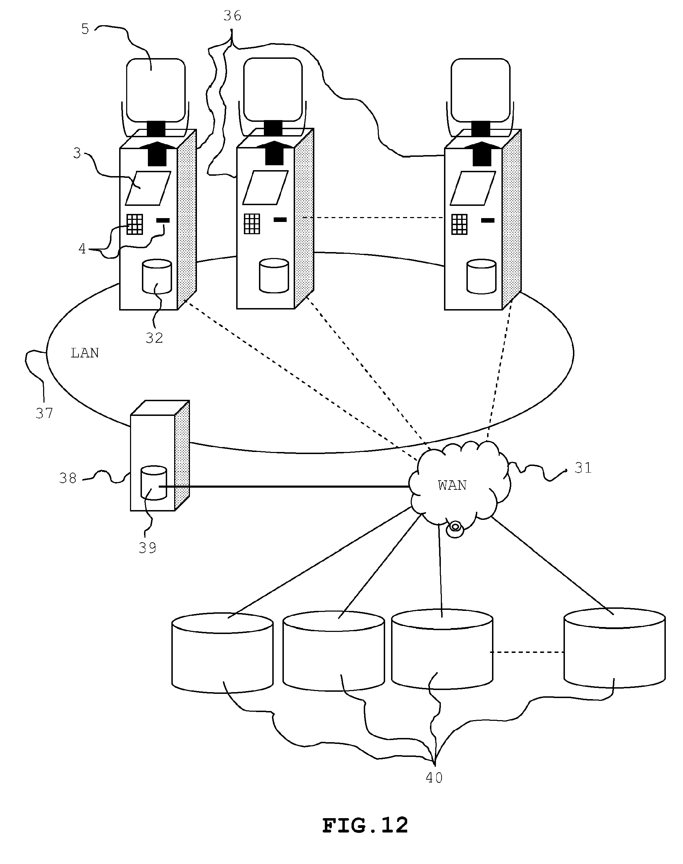

La figure 12 illustre une autre variante de mise en oeuvre de point de chargement selon l'invention. Il s'agit de l'équipement d'un point de vente ou de mise à disposition de contenus en libre service. Dans cet exemple, une pluralité de bornes autonomes 36 sont mises à disposition des utilisateurs en libre service. Chacune de ces bornes permet à l'utilisateur de sélectionner un ou plusieurs objets numériques parmi la pluralité des objets accessibles et/ou immédiatement disponibles et de les charger dans le dispositif de stockage. La borne offre en outre des moyens 3 comme dans les cas précédents pour sélectionner et/ou modifier les conditions de consommation associées aux objets stockés et/ou de manière globale pour un compte utilisateur donné. Des opérations de nature économique sont également rendues possibles par la présence de moyens 4 tels que lecteur de carte de paiement, de carte de crédit, de lecteur de billets de banque etc.

Une pluralité de bornes dans un même lieu peut avantageusement donner lieu à un partage de ressources comme les accès réseaux 31 à haut débit pour notamment l'accès à des contenus stockés dans des banques de données distantes 40 et/ou à la gestion des comptes clients dans le cas d'une gestion centralisée distante. Le partage de ressources réseau ou locales repose avantageusement sur la connexion des bornes à un réseau local 37. Il est également avantageux d'ajouter un serveur 38 connecté au réseau local 37 et doté de moyens de stockage locaux 39 pour notamment jouer le rôle de mémoire cache de second niveau pour optimiser les flux entre les serveurs distants et les bornes de chargement locales.

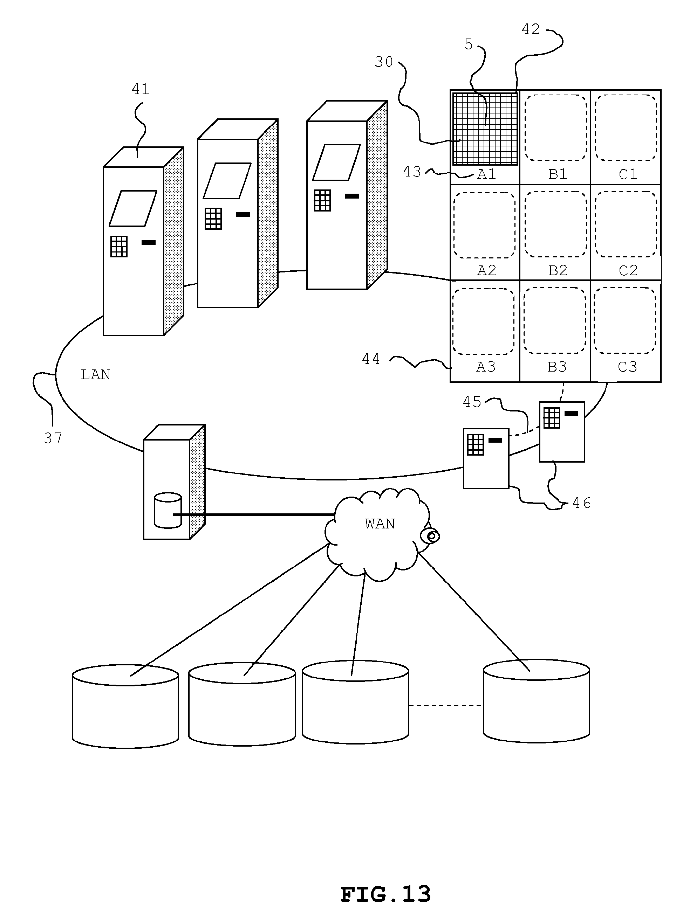

La figure 13 illustre une autre variante de mise en oeuvre de point de chargement selon l'invention tel qu'illustré par la figure précédente. La fourniture d'une pluralité de contenus multimédia en haute définition peut conduire à des temps de chargement trop longs pour que l'attente soit considérée comme acceptable par l'utilisateur. Cette situation peut se rencontrer même lorsque les interfaces entre le système de chargement et le dispositif de stockage permettent des transferts d'information à très haut débit compte tenu des volumes considérables d'information à transférer. Dans de tels cas il est particulièrement avantageux de séparer les fonctions de chargement du dispositif 5 et celles qui supposent une interaction avec l'utilisateur comme la sélection des contenus et le cas échéant les fonctions de sélection des conditions de consommation et/ou les transactions économique. La séparation physique entre les moyens 41 qui assurent les interactions entre l'utilisateur et le système d'une part et des moyens 44 qui assurent les interactions entre les dispositifs de stockage et le système d'information d'autre part permet d'optimiser de manière significative l'utilisation des ressources et de fluidifier les flux de personnes.
Les moyens de chargement proprement dits sont par exemple rassemblés sous la forme d'un mur de casiers 44 à l'image de se qui se fait en matière de consignes automatiques dans les gares, les grands magasins et les piscines. Chaque casier comprend si possible une pluralité de moyens d'interfaçage différents avec le système de chargement pour être en mesure de recevoir le plus grand nombre de modèles de dispositif de stockage possible. Chaque casier de chargement 42 comprend en outre des moyens 43 pour permettre aux utilisateurs de repérer le casier qui leur a été attribué. Des moyens d'informations additionnels tels qu'un affichage du temps de chargement restant peuvent être utiles pour indiquer à l'utilisateur le temps dont il dispose pour d'éventuelles autres tâches avant de reprendre son dispositif chargé. Des moyens 30 pour empêcher l'accès au dispositif de stockage pendant son chargement sont en outre maintenus à l'état bloqué au delà du chargement des informations proprement dit, jusqu'à ce que l'utilisateur concerné libère l'accès au dispositif. Cette disposition avantageuse permet à l'utilisateur de ne pas à avoir à exercer une surveillance du dispositif dont il est responsable pendant son chargement. Ceci permet en outre à l'utilisateur de reprendre son dispositif chargé après la fin du chargement sans risquer de vol ou de prélèvement erroné par un tiers.

Les moyens de libération conditionnelle de l'accès au dispositif de stockage en fin de chargement peuvent être associés à des lecteurs d'identifiants physiques uniques tels que des lecteurs de carte avec ou sans contacts ou des lecteurs d'information biométrique, par exemple d'empreintes ou encore des moyens logiques tels qu'un clavier pour la saisie d'un code d'utilisateur unique. Ces moyens d'identification physiques ou logiques peuvent être associés à chaque casier. Cependant, pour des raisons de réduction des coûts et des risques de pannes, il est avantageux de sensiblement centraliser le poste de libération de l'accès aux casiers en fin de chargement. Cet objectif est atteint par la mise à disposition d'une pluralité de bornes de libération des casiers 46 en nombre sensiblement inférieur au nombre de casiers.

La communication entre le ou les postes de libération et les moyens de chargement peut utiliser le même réseau local 37 qui permet aux moyens de sélection et aux moyens de chargement de partager de l'information. Les échanges d'information entre les moyens de chargement et les moyens de libération peuvent également reposer sur une liaison spécifique 45 pour les échanges entre les deux sous-systèmes.

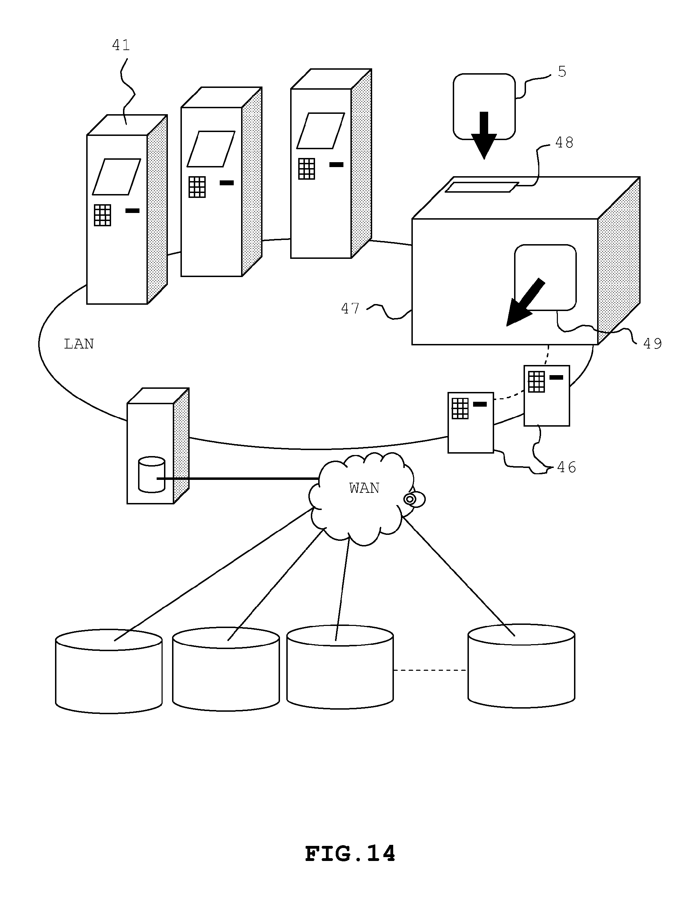

La figure 14 illustre une autre variante de mise en oeuvre de point de chargement répondant d'une manière sensiblement différente au même besoin que l'exemple précédent. Il s'agit comme dans la figure précédente de séparer les moyens assurant l'interaction utilisateur-système 41 des moyens assurant l'interface dispositif de stockage-système 47. Cet exemple non limitatif de point de chargement suppose un mode d'exploitation de l'invention dans lequel les dispositifs de stockage ne sont pas affectés de manière individualisée et permanente à un utilisateur donné mais repris et redistribués de manière banalisée à chaque nouveau chargement.

L'utilisateur restitue le dispositif de stockage qu'il détenait lorsqu'il n'en à plus l'usage, à tout moment, au plus tard avant un nouveau chargement. Cela étant le gestionnaire du service et/ou du parc de dispositif de stockage peut allouer à un même utilisateur le droit à détenir plus d'un dispositif de stockage. Dans ce cas l'utilisateur ayant épuisé ses droits devra seulement restituer au moins un dispositif de stockage lorsqu'il souhaitera un nouveau chargement. Le système de gestion du parc de dispositifs de stockage comprendra au moins un point de gestion des retours 48 et un point de livraison des dispositifs nouvellement chargés 49. L'indentification des produits restitués et des produits nouvellement chargés et dans le cas d'un exploitant opérant sur plusieurs sites de restitution/mise à disposition, une mise en réseau des informations permettra une gestion efficace du parc de dispositifs de stockage.

Le retour des dispositifs peut aussi être pris en charge par un prestataire préposé à leur collecte sur appel ou passant à des instants convenus, il est possible également d'utiliser les services postaux ou tout autre services de transport de biens dans le cadre d'une prestation dédiée ou combinée sans sortir du cadre de l'invention.
Il est possible également que plusieurs exploitants mettent en commun leur parc de dispositif de stockage. Dans ce cas, une gestion du stock avec un traçage dynamique de chaque dispositif et/ou des mécanismes de compensation sont mis en oeuvre. Comme dans l'exemple précédent les moyens de chargement 47 peuvent assurer la rétention des dispositifs de stockage pendant la phase de chargement mais aussi au-delà, jusqu'à ce que l'utilisateur concerné appelle le dispositif de stockage qui lui est destiné pour enlèvement. Le cas échéant, si cette variante de point de chargement selon l'invention est mise à disposition des utilisateurs en libre service, une ou plusieurs bornes 46 peuvent être mise à disposition pour libérer les dispositifs chargés et retenus dans le dispositif de chargement. Ce type de moyens de chargement, potentiellement mis en oeuvre de manière compacte, peut également convenir au cas par exemple du prestataire assurant la livraison au point de consommation d'un dispositif de stockage chargé et qui collecte les dispositifs de stockage dont le contenu a été consommé, dont les droits associés ont expiré ou encore dont le contenu n'intéresse plus le détenteur.

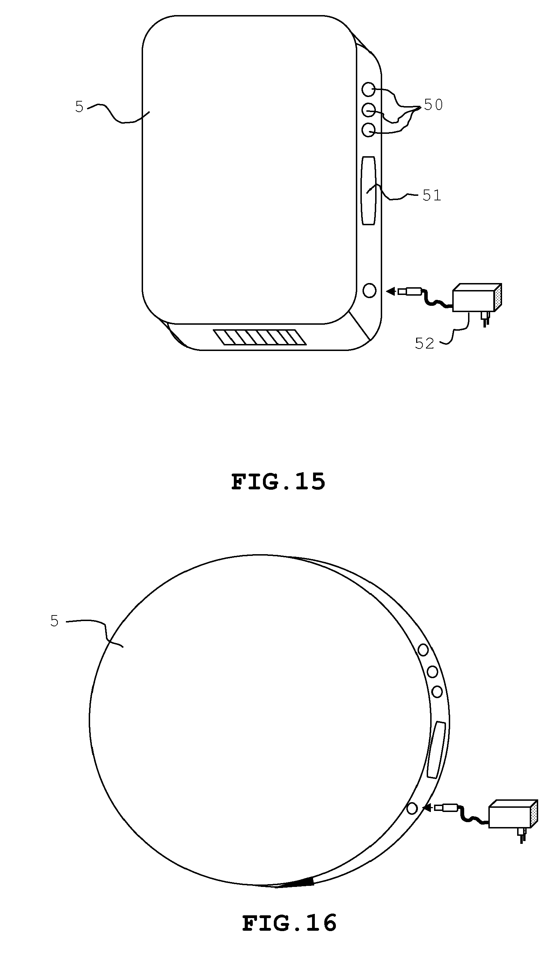

La figure 15 illustre une première variante du dispositif de stockage selon l'invention 5 avec des interfaces 50, 51 pour les moyens de restitution et d'alimentation 52 au point de consommation. Outre la connectique utilisée au point de chargement, cette variante comprend directement sur une paroi du dispositif de stockage selon l'invention des sorties de signaux analogiques 50 par exemple une sortie vidéo composite et une sortie son stéréophonique. Ces sorties de base assurent la compatibilité avec les dispositifs de restitution audio et/ou vidéo les plus anciens. L'ajout d'une sortie numérique 51 telle que par exemple HDMI permet de raccorder des dispositifs de restitution de l'image et du son de dernière génération, possiblement compatibles avec une image en haute définition et avec un son multicanal. Une entrée d'alimentation permet de subvenir aux besoins en énergie de l'appareil en phase de restitution du contenu stocké.

La figure 16 illustre une seconde variante du dispositif de stockage 5, fonctionnellement identique à la précédente. Il s'agit dans cet exemple de rappeler que l'on reste dans le cadre de l'invention quelque soit la forme du dispositif de stockage même si pour des raisons de commodité d'illustration on le représente sous une forme parallélépipédique dans la plupart des figures.

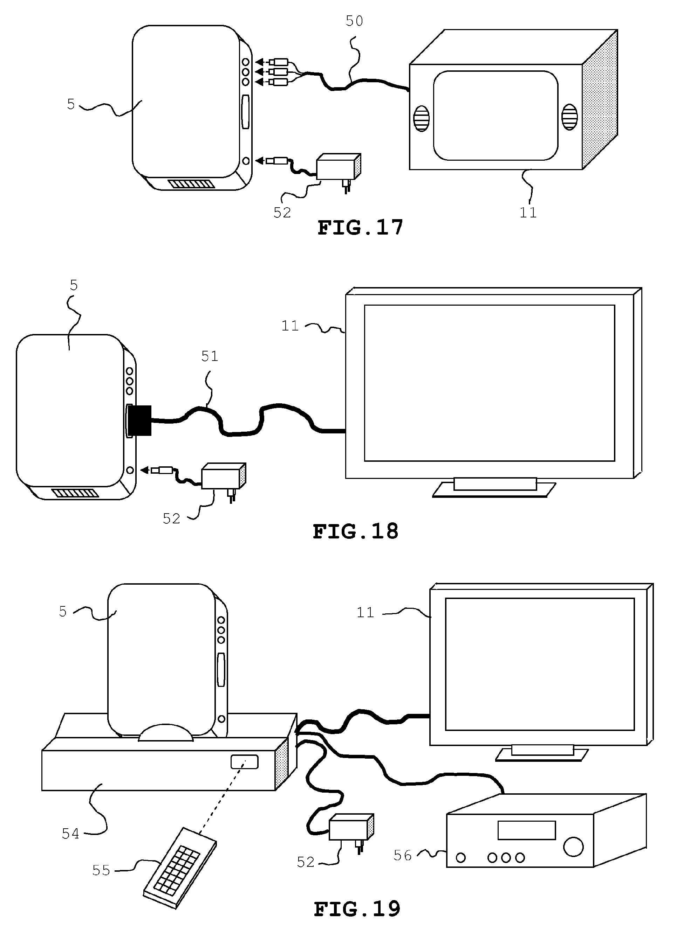

La figure 17 illustre un raccordement direct du dispositif de stockage 5 au point de consommation à des moyens de restitution 11 ayant une entrée analogique 50, par exemple un téléviseur classique. Dans cet exemple, le dispositif est alimenté en énergie par un bloc secteur 52 qui lui est propre.

La figure 18 illustre un raccordement direct du dispositif de stockage 5au point de consommation à des moyens de restitution 11 ayant une entrée numérique 51, par exemple un téléviseur de dernière génération avec entrée numérique. Dans cet exemple, le dispositif est alimenté en énergie par un bloc secteur 52 qui lui est propre.

La figure 19 illustre un raccordement indirect du dispositif de stockage 5 au point de consommation à des moyens de restitution enrichis. En effet un dispositif de stockage compact et économiquement viable ne peut pas offrir toutes les interfaces permettant de couvrir l'ensemble des besoins potentiels. Dans cet exemple de mise en oeuvre, le dispositif de stockage est raccordé aux appareils de restitution externes 11, 56 et aux moyens d'alimentation 52 par l'intermédiaire d'une station d'accueil 54 permettant notamment une connexion et une déconnexion de toutes les liaisons du dispositif sensiblement en un seul mouvement. En outre, la station offre potentiellement une plus grande richesse de connexion que ne le permettent les moyens embarqués dans le dispositif de stockage.

Il est également possible d'ajouter des fonctions complémentaires dans la station comme l'enregistrement de signaux analogiques et/ou numériques, la réception de signaux provenant d'une télécommande infrarouge 55 dans le cas où le dispositif n'intègre pas cette fonctionnalité. Dans la variante de mise en oeuvre à minima du dispositif de stockage selon l'invention qui n'intègre que les moyens de stockages proprement dits et les composants indispensables à la gestion de la protection des données comme par exemple un identificateur matériel unique et/ou une horloge temps réel autonome avantageusement non modifiable par l'utilisateur. Dans une version encore plus minimale, le dispositif de stockage peut n'être qu'un disque dur, avantageusement non standard sur au moins certaines caractéristiques pour limiter les risques de fraudes. Le numéro d'identification unique et ou des clés de cryptage pouvant résider dans une mémoire ineffaçable du disque dur. L'horloge temps réel peut éventuellement être déplacée dans la station d'accueil si des moyens sont mis en oeuvre pour empêcher l'utilisateur d'en modifier le réglage dans le cas ou les droits et conditions d'utilisation d'au moins un contenu reposent au moins en partie sur une information temporelle telle que la date et l'heure, le jour de la semaine etc. La station d'accueil adaptée à un tel dispositif de stockage devient un élément indispensable du système qui intègre notamment les fonctions décodage et/ou de décryptage et/ou l'horloge temps réel le cas échéant pour fournir les contenus en clair à des moyens de restitution standards.

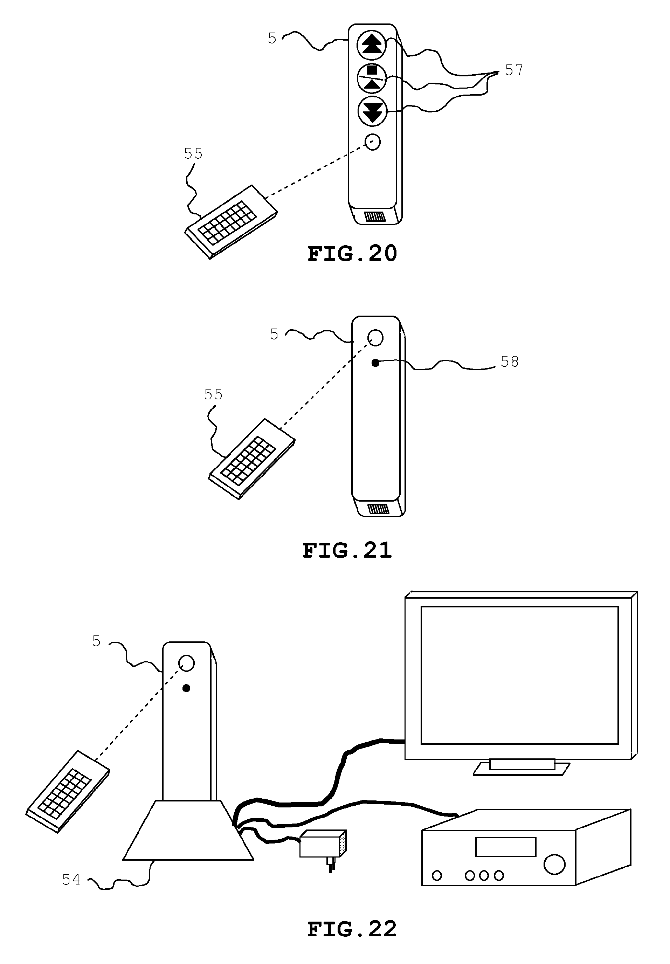

La figure 20 illustre une variante de mise en oeuvre du dispositif de stockage 5 qui inclut des moyens de commandes 57 pour les fonctions de base communes à tous les équipements audio et/ou audiovisuels. L'exemple proposé inclut en outre un récepteur de signaux émis par une télécommande sans fil 55 par infrarouge ou par radio pour des commandes plus élaborées et pour le confort de la commande à distance.

La figure 21 illustre une variante de mise en oeuvre du dispositif de stockage intégrant une interface utilisateur minimale qui se résume à un récepteur de télécommande et éventuellement un voyant de mise sous tension 58. Dans cet exemple, l'ensemble des commandes du dispositif sont dévolues à une télécommande sans fil 55.

La figure 22 illustre une variante de mise en oeuvre du dispositif de stockage 5 qui reprend les caractéristiques du produit de la figure précédente dans un contexte de raccordement indirect aux appareils extérieurs via une station d'accueil 54.

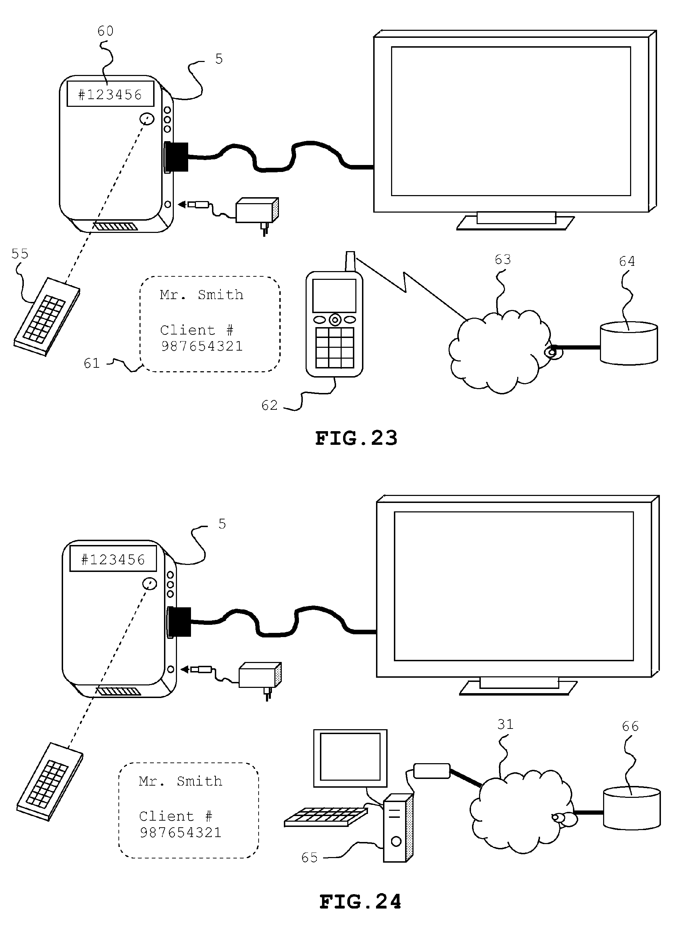

La figure 23 illustre une première méthode pour offrir à l'utilisateur la possibilité d'interagir avec le dispositif de stockage 5 et/ou son compte client au point de consommation. Il s'agit de modifier tout ou partie des conditions de consommation associées à tout ou partie des objets numériques multimédia préalablement stockés dans le dispositif. Les conditions de consommation ayant, au moins dans les applications commerciales de l'invention, des répercussions sur les montants imputés sur le compte du client, il est nécessaire de mettre à jour le système de gestion de l'exploitant en conséquence. Le dispositif de stockage selon l'invention est au moins dans sa version la plus courante dépourvu de moyens de communication avec des réseaux extérieurs. La communication avec le système de gestion de l'exploitant repose donc sur des moyens extérieurs. Il est possible de réaliser l'interaction entre l'utilisateur et le système de gestion de l'exploitant d'une manière sûre pour les deux parties à partir de la procédure asynchrone suivante : le compte de l'utilisateur est imputé a priori du montant des prestations maximales qu'il peut consommer en fonction de ce qu'il à chargé et d'éventuels paramétrages qu'il a réalisé. Lors du retour du dispositif sur un point de chargement compatible, les informations représentatives de ce qui a été réellement consommé sont transmises automatiquement par le dispositif de stockage au système de gestion de l'exploitant qui recrédite l'éventuelle différence en faveur du client à posteriori. Avantageusement il est proposé à l'utilisateur de fixer lui-même les conditions maximales de consommation qui lui sont appliquées, soit de manière globale pour tous ses chargements ou de manière différentiée lors de chaque chargement et/ou pour chaque objet chargé. Outre la fixation de ces paramètres au point de chargement, cette possibilité peut également être offerte sur le site internet de l'exploitant.

La modification des conditions de consommation préalablement établies peut également être proposée en temps réel dans de cadre de l'invention. Pour ce faire l'utilisateur accède au système de gestion de l'exploitant par des moyens connectés à un réseau par exemple par le réseau téléphonique 63. Dans le cas du réseau téléphonique, un serveur vocal 64 invite l'utilisateur à s'identifier de manière unique et certaine au moyen par exemple de son identifiant client 61 et/ou de l'identifiant 60 du dispositif de stockage selon l'invention 5. Le système peut éventuellement être sécurisé par la prise en compte du numéro de téléphone appelant préalablement enregistré dans le système de gestion comme un numéro de téléphone associé à ce client. Le système de gestion de l'exploitant a en mémoire les caractéristiques des objets chargés dans le dispositif du client et les droits associés notamment ceux qui fixent les conditions de consommation. Le serveur vocal propose à l'utilisateur les différentes possibilités de modifications offertes et attend ses instructions. Chaque demande dans l'ensemble des choix proposés conduit le serveur à calculer un nombre sensiblement à usage unique qui, entré dans le dispositif de stockage, provoque en son sein les modifications souhaitées. Le moyen naturel d'entrer ce nombre dans le dispositif de stockage est par sa télécommande 55. Cette opération peut en tout ou en partie impliquer une navigation dans des menus, des écrans ou des listes. On reste bien dans le cadre de l'invention si le code en retour fourni par le système de gestion de l'exploitant utilise des touches de la télécommande ou des sélections d'éléments graphiques non numériques sur un écran.

Il est également possible d'établir une continuité entre le système de gestion de l'exploitant et le dispositif au moyen par exemple d'un récepteur embarqué de signaux à fréquences vocale dits DTMF issus du téléphone 62 qu'il convient de plaquer sur le dispositif pour que le code de modification soit entrée directement sans saisie de la part de l'utilisateur. Il est également possible dans le cadre de l'invention d'équiper le dispositif de stockage selon l'invention d'un ou de plusieurs récepteurs d'autres signaux susceptibles d'être émis par des téléphones standards, notamment par des téléphones portables. Il peut s'agir par exemple d'une liaison Bluetooth, une liaison IrDa, une liaison Wifi etc.

La figure 24 illustre une seconde méthode pour offrir à l'utilisateur la possibilité d'interagir avec le dispositif de stockage et/ou son compte client au point de consommation. Le terminal grand public raccordé à un réseau le plus répandu est le téléphone portable mais de plus en plus de familles possèdent un ordinateur familial raccordé à Internet par une liaison permanente à haut débit par exemple utilisant le câble ou l'ADSL. Un microordinateur, un lecteur multimédia portable, un assistant personnel numérique ou tout autre terminal raccordé à Internet 31 de manière directe ou indirecte par exemple par l'intermédiaire d'un point d'accès Wifi peut être utilisé dans le cadre de l'invention pour interagir avec le système de gestion 66 de manière analogue à ce qui a été décrit dans le cadre de la figure précédente.

Il est également possible sans sortir du cadre de l'invention de transférer les modifications souhaitées directement du terminal externe 65 dans le dispositif de stockage selon l'invention 5 sans avoir à ressaisir des informations restituées par le terminal. Ceci peut se faire comme décrit précédemment par des liaisons sans fil mais dans le cas d'un matériel informatique il est également possible de transférer les informations par des moyens filaires tels que par un bus standard comme USB, Firewire, Sata etc.

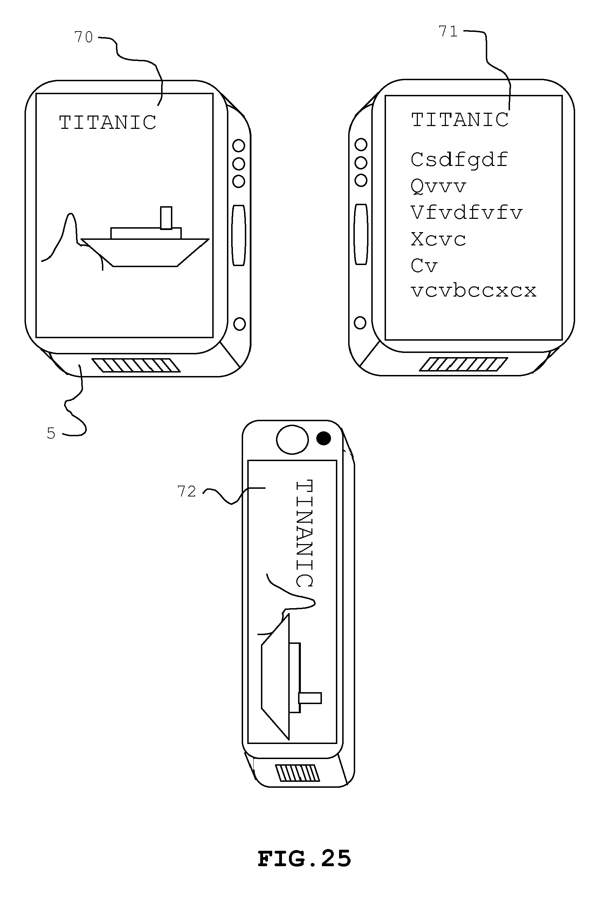

La figure 25 illustre une première variante de mise en oeuvre de moyens pour communiquer au moins visuellement avec l'utilisateur par l'utilisation d'au moins une paroi du dispositif de stockage 5. Cet exemple se situe dans le contexte classique d'un exploitant en location de vidéos qui est passé du support cassette vidéo au support DVD et qui passe à la mise en oeuvre de la présente invention comme l'étape naturelle d'après pour les raisons et les avantages indiqués précédemment. Cette figure illustre l'exemple d'un dispositif de stockage selon l'invention dont la forme du boîtier à été choisie pour évoquer une boîte de DVD qui, elle-même en son temps, reprenait les caractéristiques principales des boîtes de cassettes vidéo. A chaque changement de support il convient de ne pas trop changer les habitudes des utilisateurs pour que la migration se déroule sans problème.

L'exemple utilise au moins une face du dispositif, 70, 71, 72 pour afficher des éléments d'information et des éléments graphiques analogue à ceux que l'on trouve sur les jaquettes des supports antérieurs. Les moyens d'affichage embarqués sur au moins une face du dispositif sont avantageusement réinscriptibles. L'information affichée peut être fournie par des moyens extérieurs au dispositif de stockage, par exemple faisant partie du point de chargement ou l'information peut être issue de données stockées elles-mêmes dans le dispositif de stockage ou calculées à l'intérieur du dispositif de stockage à partir d'informations qui y sont stockées comme par exemple à partir des métadonnées associées aux oeuvres contenues dans le dispositif.

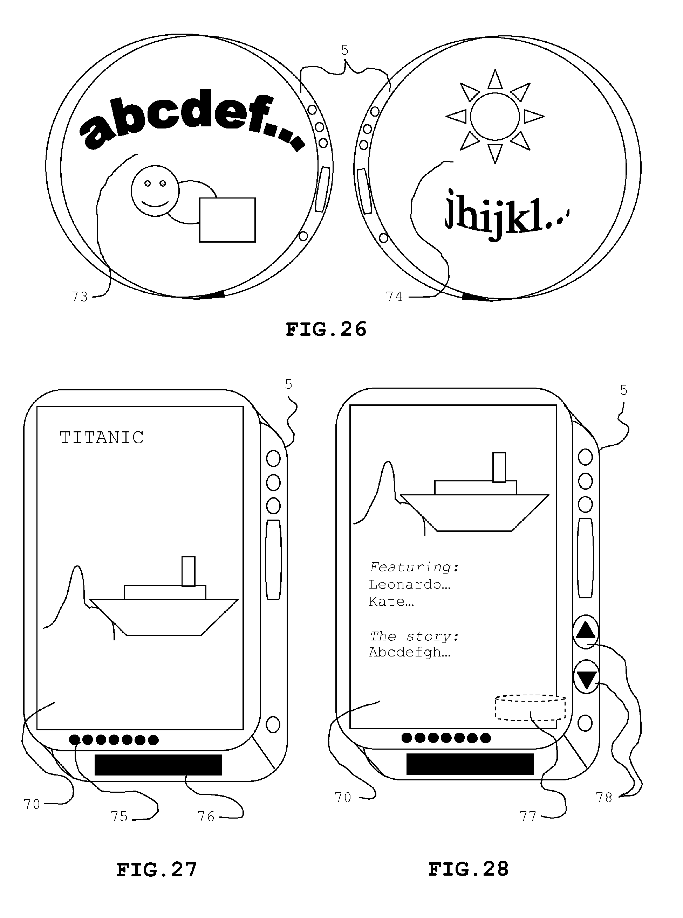

La figure 26 illustre une seconde variante de mise en oeuvre de moyens pour communiquer au moins visuellement avec l'utilisateur par l'utilisation d'au moins une paroi 73, 74 du dispositif de stockage 5. La forme du dispositif de stockage peut être quelconque ce que cette figure illustre avec une forme qui se rapproche sensiblement de celle d'un DVD ou d'un disque audio.

La figure 27 illustre une variante de moyens de mise à jour du contenu affiché sur au moins une paroi 70 du dispositif de stockage 5. Dans cet exemple les moyens d'affichage sur au moins une paroi ont une interface 75 qui leur est exclusivement dédiée et qui est indépendante de celle 76 des moyens de stockage du dispositif. La gestion indépendante des fonctions principales du dispositif de stockage et des moyens d'affichage qui lui sont associé rend possible la concession de cet espace de communication à un tiers pour par exemple y insérer de la publicité.

La figure 28 illustre une variante de moyens pour présenter du contenu sur au moins une paroi 70 du dispositif de stockage 5, contenu qui excède les capacités de restitutions et qui nécessite des moyens de navigation 78. Cet exemple illustre la possibilité d'inclure davantage d'information que celle qui pourrait être stockée de manière statique sur la surface d'affichage. Des moyens de navigation permettent à l'utilisateur d'explorer l'ensemble du contenu proposé dans la fenêtre d'affichage. Des moyens de stockage d'énergie locaux 77 assurent une autonomie suffisante pour une utilisation normale entre le point de chargement et le point de restitution. Le choix de moyens d'affichages bistables offre l'avantage supplémentaire d'un affichage permanent du dernier écran consulté et/ou d'un écran de repli par défaut qui est affiché avant l'épuisement complet des moyens de stockage d'énergie locaux.

### Applications du système selon l'invention.

### (« Method of business » in the corresponding US patent)

La mise en oeuvre du procédé selon l'invention est avantageuse dès que la relation entre client et fournisseur de contenus numériques est récurrente et que d'une manière ou d'une autre, directe ou indirecte, le client s'engage contractuellement et le cas échéant achète, ou loue moyennant le versement d'une caution, un dispositif de stockage sécurisé selon l'invention ainsi qu'éventuellement des accessoires complémentaires pour l'équipement du point de consommation. Il peut être attribué au client un dispositif de stockage dédié, identifié de manière unique et géré en association avec le compte du client.

Le procédé, le système et les dispositifs pour le mettre en oeuvre est particulièrement bien adapté à la mise à disposition dans un contexte marchand ou non, pour un temps donné et/ou un nombre donné de visualisation/audition ou encore dans le cadre d'une imputation économique à l'acte avec ou sans limitation dans le temps de contenus vidéo et/ou musicaux. Ce procédé, système et dispositifs, est également particulièrement bien adapté à la diffusion de contenus de type journaux et magasines pour lesquels les modèles économiques traditionnels de la vente au numéro ou de la souscription d'un abonnement peuvent être transposés.

Dans un mode plus sophistiqué et particulièrement avantageux de mise à disposition des dispositifs selon l'invention et tout particulièrement en ce qui concerne le dispositif de stockage, le client n'acquière plus un ou plusieurs dispositifs selon l'invention sous la forme d'objets uniques qui lui sont attribués de manière définitive. Le client acquière un droit d'usage pour des dispositifs interchangeables. Ce droit peut, le cas échéant, être acquis de manière définitive ou être assorti de conditions de reprises ou encore d'arrêt du droit à l'échange. Il s'agit de banaliser et de dissocier le contenant qu'est le dispositif de stockage, du service de mise à disposition d'oeuvres dont il est le support. L'invention permet la livraison physique d'un dispositif de stockage pré chargé avec un ou des contenus déterminés avec reprise d'un dispositif de stockage équivalent dont le client n'a plus l'usage parce qu'il n'est plus intéressé par son contenu ou qu'il en a épuisé les droits. Un moyen d'identification unique associé à chaque dispositif de stockage comme par exemple, un code à barre uni ou multidimensionnel, une étiquette radiofréquence ou un moyen interne d'identification unique lisible par une connexion avec un dispositif de lecture permet son identification. A partir de la possibilité d'identifier chaque dispositif de stockage, la gestion d'un parc peut se faire aisément au moyen d'un système d'information adapté, à la manière de ce que font les sociétés de gestion de parc de conteneurs utilisés dans le transport maritime, ferroviaire ou routier. Avantageusement, le suivi de la localisation de chaque dispositif de stockage se met à jour lors de chaque raccordement à un point de chargement raccordé à un réseau en exploitant un identifiant unique associé à chaque dispositif. La gestion d'un parc de dispositifs de stockage banalisés élargit les perspectives de fourniture de services à la livraison de contenus multimédia à domicile. De manière avantageuse ce service peut être couplé à d'autres offres et faire naître des synergies commerciales comme par exemple des prestations de livraison couplées de repas à domicile incluant la livraison additionnelle d'un dispositif de stockage pré chargé, avec par exemple la musique d'ambiance assortie au type de nourriture et une vidéo.

L'invention concerne en outre un procédé pour exposer l'utilisateur à du contenu qu'il n'a pas sollicité a priori, en particulier pour le pousser à consommer des contenus susceptibles de lui plaire, dont il ignorait l'existence ou auxquels il n'aurait pas pensé spontanément. De l'information non sollicitée par l'utilisateur peut être chargée dans l'espace résiduel après chargement des contenus sélectionnés par l'utilisateur. Ladite information non sollicitée peut être de la publicité et/ou un magazine annonçant les sorties de nouveaux titres incluant des bandes annonces et/ou des bonus et/ou des court-métrages. L'occupation la plus avantageuse de l'espace de stockage résiduel pour l'exploitant consiste à précharger des titres non sollicités ayant la probabilité la plus élevées de susciter un ou plusieurs actes de consommations supplémentaires. Une première méthode pour sélectionner les oeuvres non sollicitées à précharger consiste à retenir les titres les plus chargés du moment et/ou les nouveautés. Un raffinement supplémentaire de la méthode repose sur l'interrogation de la base de données contenant l'historique du compte client pour ne pas charger une oeuvre ayant déjà été consommée par ce client et/ou une oeuvre ayant déjà fait l'objet d'un préchargement non sollicité, ce préchargement n'ayant pas été consommé. Dans un mode particulièrement avantageux de mise en oeuvre en ce qu'il augmente significativement la probabilité de consommation additionnelle, la méthode de sélection automatique des contenus à précharger exploite la base de donnée des historiques de consommation des clients et/ou un profilage du client établit à partir de ses habitudes de consommation et/ou d'informations qu'il à bien voulu communiquer par exemple à l'occasion de l'ouverture de son compte. Ainsi par exemple l'exploration de la base de données des historiques de tout ou partie des clients permet de faire ressortir les titres que ceux qui ont sélectionné les mêmes titres que le client a aussi sélectionnés. Le modèle d'analyse prédictive des préférences du client selon l'invention peut être avantageusement enrichi par la prise en compte des informations sur le sexe et l'âge du client connues du système et/ou des informations d'appréciation des titres consommés que le système selon l'invention permet de saisir et de collecter. Ces éventuelles oeuvres non préalablement sollicitées qui ont été préchargées feront avantageusement l'objet d'une proposition attrayante au point de consommation. Il peut s'agir d'extraits visualisables gratuitement et/ou d'une offre commerciale pouvant être avantageuse car le coût marginal associé aux titres préchargés est faible. Dans un mode de mise en oeuvre particulièrement sophistiqué, les extraits gratuits ne sont pas nécessairement des durées prédéterminées mais des morceaux choisis, spécifiques à un contenu donné, qui sont particulièrement attractif en eux-mêmes ou donnant envie de connaître la suite. Les morceaux choisis sont sélectionnés par du personnel de l'exploitant ou par des prestataires tiers spécialisés. Les séquences dont il est question sont marquées comme telles en métadonnées associées au titre préchargé et sont avantageusement restituées par le dispositif au point de consommation sous la forme qui s'apparente à une bande annonce. Selon le mode d'interaction avec le système de gestion retenu en temps réel ou en différé, les sommes correspondant aux contenus additionnels pourront être imputées a priori et déduite a posteriori si les titres préchargés de manière non sollicitée n'ont pas été consommés.

Les informations connues du client par le système de gestion pourront en outre être utilisées pour fidéliser le client et/ou stimuler sa consommation. Ainsi par exemple il est possible d'inviter le client à venir se présenter à un point de chargement particulier ou à n'importe quel point de chargement d'un réseau d'exploitant pour charger au moins un titre à l'occasion de son anniversaire ou de l'anniversaire de sa souscription ou encore à l'anniversaire de l'installation de son point de chargement habituel etc. Une offre de chargement gratuite ou à des conditions avantageuses peut également être proposée aux clients selon le principe des cartes de fidélité. Le fait générateur d'une telle proposition peut également être le fait que ce client n'a pas consommé depuis un certain temps et/ou que le client a répondu à des questions ou a évalué des titres ou a été tiré au sort et. Les invitations peuvent avantageusement être générées de manière complètement automatique selon des modèles et avec des critères à déterminer globalement par l'exploitant dans son système de gestion. Des moyens d'information du client qui sont peu coûteuses et automatisables telles que l'envoi de SMS, de courriels ou de messages vocaux à des adresses et/ou des numéros préalablement indiqués par les clients seront privilégiées.

L'offre de contenus non sollicités a priori peut être une avantageuse contrepartie pour exposer l'utilisateur à du contenu à caractère promotionnel et/ou publicitaire. Des moyens permettent de conditionner la libération de la restitution d'au moins un contenu protégé stocké dans le conteneur multimédia à l'exposition préalable à tout ou partie d'un contenu à caractère promotionnel et/ou publicitaire et/ou à son exposition pendant un temps minimum déterminé.

L'offre de contenus non sollicités a priori peut être une avantageuse contrepartie pour motiver l'utilisateur afin qu'il réponde à des questions. Des moyens permettent de conditionner la libération de la restitution d'au moins un contenu protégé stocké dans le conteneur multimédia à la réponse préalable à tout ou partie d'un questionnaire.

Le dispositif de stockage peut également être utilisé dans les transports en commun comme l'avion ou le train pour offrir de la musique et/ou de la vidéo d'agrément, des consignes de sécurité sous forme de vidéos ou de textes, des magazines des catalogues de vente en duty free le cas échéant etc. La fourniture du dispositif selon l'invention dans un endroit fermé comme un avion, où il est relativement simple de les récupérer, peut dispenser de mesures comme la prise de caution qui peut freiner l'appétence des clients pour le service.

L'invention concerne en outre un procédé pour diffuser par avance des contenus non exploitables avant une date prédéterminée. La date à laquelle le contenu préchargé sera rendu visible et/ou disponible à la consommation sera gérée localement ou au point de restitution à partir d'information fournies par une horloge temps réel embarquée dans le dispositif de stockage.

Un procédé pour optimiser l'utilisation des points de chargement et étaler les pointes de demandes à l'occasion de sorties médiatisées d'oeuvres de tous types, vidéo, musicale, littéraire etc., on précharge, éventuellement à l'insu de l'utilisateur, à la fin du chargement des objets explicitement demandés. Ce préchargement peut avantageusement être conditionné par la vérification préalable du fait que la capacité résiduelle de stockage du dispositif est suffisante. Avantageusement, des moyens, qui reposent en tout ou partie sur des informations fournies par l'horloge autonome sécurisée embarquée dans le conteneur, permettent de ne rendre libérables qu'à partir d'une date déterminée les contenus protégés préchargés dans le but d'étaler les pointes de demandes. Ce raffinement fonctionnel permet de commencer à distribuer des contenus multimédia protégés par anticipation de leurs dates de sorties officielles sur les territoires concernés, ces contenus ne devenant restituables qu'à partir de ladite date officielle.

Un procédé pour diffuser des contenus autoproduits par les utilisateurs eux-mêmes qui sont proposés aux autres utilisateurs dans le cadre de l'animation d'une communauté ou club d'utilisateurs, après contrôle éventuel de bienséance par l'exploitant.

Un procédé pour collecter des informations stockées dans le dispositif, ces informations étant générée au sein du dispositif de stockage ou collectées par ce dernier au point de consommation. Il peut s'agir par exemple d'informations liées aux consommations précédentes, d'informations exploitables à des fins de mesure d'audience, d'informations représentatives de temps d'exposition à des objets identifiés, d'informations liées à l'observation du mode d'utilisation du dispositif, d'informations liées à l'observation des contenus, d'informations représentatives d'évaluations selon un ou plusieurs critères, d'informations représentatives de résultats de sondage d'opinion, d'informations représentatives de réponses à des questions etc. Tout ou partie des information collectées peuvent être extraites du dispositif de stockage à l'occasion d'une connexion à un point de chargement.

Les moyens de communication autonomes du dispositif de stockage selon l'invention peuvent être utilisés directement par l'exploitant pour diffuser de la publicité et/ou de l'information directement liée à son activité. L'exploitant peut concéder tout ou partie de l'espace de communication autonome à des tiers ou encore en concéder l'intégralité de la gestion à une régie.

Dans un contexte de mise en oeuvre non marchand, comme par exemple dans le cadre de l'équipement de médiathèques publiques, les moyens de communication autonomes peuvent être utilisés pour transmettre de l'information par exemple sur les nouveautés disponibles mais aussi éventuellement pour communiquer des informations municipales et/ou d'intérêt général.

Le dispositif de stockage selon l'invention peut avantageusement stocker des contenus numériques de différentes natures comme décrit précédemment. Il est également possible à plusieurs sociétés d'exploitation de partager l'espace de stockage offert par le dispositif selon l'invention. Il est également possible à des exploitants d'utiliser des dispositifs de stockage propriété d'exploitants tiers moyennant des méthodes de suivi et de gestion de parc à la manière de ce qui ce fait dans le monde du transport de marchandises utilisant des conteneurs.

Bien sûr, l'invention n'est pas limitée aux exemples qui viennent d'être décrits et de nombreux aménagements peuvent être apportés à ces exemples sans sortir du cadre de l'invention. En outre, les exemples de solutions ou de standards techniques cités sont ceux qui sont en vigueur au moment du dépôt de la demande brevet. Ils sont susceptibles de disparaître ou d'être rapidement remplacés par d'autres sans pour autant rendre obsolète l'invention elle même.

## Revendications

1. Conteneur portable multimédia comprenant :
- des moyens pour recevoir un ou plusieurs contenus multimédia provenant d'un dispositif de chargement,
- des moyens pour stocker des contenus multimédia ainsi reçus et
- des moyens pour exploiter de manière directe ou indirecte lesdits contenus ainsi stockés.

2. Conteneur selon la revendication 1, **caractérisé en ce que** les moyens de stockage sont en outre prévus pour stocker des informations relatives à des droits d'exploitation associés aux contenus stockées et/ou à l'utilisateur dudit contenu.

3. Conteneur selon la revendication 2, **caractérisé en ce qu'**il comprend en outre des moyens pour sécuriser lesdits contenus et/ou leurs droits associés.

4. Conteneur selon l'une des revendications 1 ou 2, **caractérisé en ce que** le contenu multimédia stocké est au moins en partie crypté.

5. Conteneur selon l'une quelconque des revendications précédentes, **caractérisé en ce qu'**il comprend en outre au moins une clé de cryptage, pour décrypter des contenus.

6. Conteneur selon l'une quelconque des revendications précédentes, **caractérisé en ce qu'**il comprend en outre au moins un élément d'information unique associé audit conteneur.

7. Conteneur selon la revendication 6, **caractérisé en ce qu'**il comprend en outre des moyens pour décrypter des contenus qui utilisent l'au moins un élément d'information unique associé audit conteneur.

8. Conteneur selon l'une quelconque des revendications précédentes, **caractérisé en ce qu'**il comprend en outre une horloge temps réel autonome et sécurisée.

9. Conteneur selon les revendications 2 et 8, **caractérisé en ce qu'**il comprend en outre des moyens pour gérer les droits d'exploitation associés aux contenus et/ou à l'utilisateur dudit conteneur à partir d'informations fournies par l'horloge temps réel sécurisée.

10. Conteneur selon la revendication 9, **caractérisé en ce qu'**il comprend en outre des moyens pour informer l'utilisateur sur des droits d'exploitation associés à l'au moins un des contenus chargés et/ou au client.

11. Conteneur selon l'une quelconque des revendications précédentes et la revendication 2, **caractérisé en ce qu'**il comprend en outre des moyens pour modifier au moins une partie des droits d'exploitation préalablement associés à l'au moins un des contenus chargés et/ou à l'utilisateur.

12. Conteneur selon l'une quelconque des revendications précédentes, **caractérisé en ce que** les moyens de stockage sont prévus pour stocker des contenus multimédia non cryptés et **en ce que** ledit conteneur est agencé pour ne pas permettre de copie desdits contenus stockés dans des moyens externes.

13. Conteneur selon l'une quelconque des revendications précédentes, **caractérisé en ce qu'**il comprend en outre des moyens pour protéger le flux sortant dudit conteneur, de sorte que ledit flux sortant ne peut être enregistré par des moyens externes.

14. Conteneur selon l'une quelconque des revendications précédentes, **caractérisé en ce qu'**il comprend en outre des moyens pour assurer son alimentation en énergie à partir d'une source externe et/ou interne.

15. Conteneur selon l'une quelconque des revendications précédentes, **caractérisé en ce qu'**il comprend en outre au moins un connecteur comprenant une pluralité de connexions unitaires prévues pour charger des contenus multimédia depuis un dispositif de chargement et/ou pour raccorder ledit conteneur à un dispositif d'adaptation à des moyens de restitution.

16. Conteneur selon la revendication 15, **caractérisé en ce que** chaque connecteur unitaire est aussi prévu pour un apport d'énergie électrique.

17. Conteneur selon l'une quelconque des revendications précédentes, **caractérisé en ce qu'**il comprend en outre au moins un canal de chargement, un canal de sortie et un canal de commande pour permettre l'exploitation du contenu stocké au point de consommation.

18. Conteneur selon la revendication 17, **caractérisé en ce que** le canal de chargement est réalisé sous la forme d'un canal de communication à très haut débit.

19. Conteneur selon l'une des revendication 17 ou 18, **caractérisé en ce qu'**il comprend en outre un canal de communication auxiliaire.

20. Conteneur selon l'une quelconque des revendications précédentes, **caractérisé en ce qu'**il comprend en outre des moyens pour interpréter et/ou recevoir des commandes à distance.

21. Conteneur selon l'une quelconque des revendications précédentes, **caractérisé en ce qu'**il comprend en outre des moyens d'identification lisibles par un dispositif externe et comprenant au moins un élément d'information unique.

22. Conteneur selon la revendication 21, **caractérisé en ce que** tout ou partie des informations associées aux moyens d'identification sont résidantes et/ou dupliquées dans une mémoire accessible à des moyens de gestion internes et/ou externes audit conteneur.

23. Conteneur selon l'une des revendications 21 ou 22, **caractérisé en ce que** les moyens d'identification comprennent un code à barre uni ou multidimensionnel et/ou une étiquette radiofréquence autonome.

24. Conteneur selon l'une des revendications 21 à 23, **caractérisé en ce que** les moyens d'identification comprennent une mémoire dédiée et non effaçable embarquée dans ledit conteneur.

25. Conteneur selon l'une des revendications 21 à 24, **caractérisé en ce que** les moyens d'identification sont prévus pour coopérer avec des moyens de paiement.

26. Conteneur selon l'une des revendications 21 à 25, **caractérisé en ce que** les moyens d'identification sont prévus pour coopérer avec des moyens de gestion de droits d'exploitation.

27. Conteneur selon l'une des revendications 21 à 26, **caractérisé en ce que** les moyens d'identification sont prévus pour coopérer avec des moyens de gestion d'un parc de conteneur.

28. Conteneur selon l'une quelconque des revendications précédentes, prévu pour pouvoir être connecté à un ordinateur, **caractérisé en ce qu'** il comprend en outre des moyens pour stocker et/ou transférer au moins un contenu numérique non protégé et/ou protégé respectivement depuis et/ou dans l'ordinateur raccordé.

29. Conteneur selon la revendication 28, prévu pour pouvoir délivrer à l'ordinateur auquel ledit conteneur est connecté, une licence associée à un contenu transféré dans ledit ordinateur.

30. Conteneur selon l'une quelconque des revendications précédentes, prévu pour pouvoir enregistrer des données relatives à la consommation des contenus stockés et/ou à l'utilisation dudit conteneur et/ou au comportement des utilisateurs et/ou à des réponses à des questions posées à au moins un utilisateur.

31. Conteneur selon l'une quelconque des revendications précédentes, **caractérisé en ce qu'**il comprend en outre des moyens antivol.

32. Conteneur selon la revendication 31, **caractérisé en ce que** les moyens antivol comprennent des moyens sensibles à l'effet de la réception d'un signal.

33. Conteneur selon l'une des revendications 31 ou 32, **caractérisé en ce que** les moyens antivol comprennent des moyens émettant un signal détectable par un dispositif de contrôle antivol externe à l'invention.

34. Conteneur selon l'une quelconque des revendications précédentes, **caractérisé en ce qu'**il comprend en outre des moyens pour afficher des images sur au moins une de ses faces.

35. Conteneur selon la revendication 34, **caractérisé en ce que** les moyens d'affichage comprennent au moins un support passif.

36. Conteneur selon l'une des revendications 34 ou 35, **caractérisé en ce que** les moyens d'affichage comprennent au moins un support passif réinscriptible.

37. Conteneur selon l'une des revendications 34 à 36, **caractérisé en ce que** les moyens d'affichage comprennent au moins un support actif ou semi-passif.

38. Conteneur selon la revendication 37, **caractérisé en ce que** le ou les supports de communication actifs ou semi-passifs sont pilotés par des moyens de contrôle et/ou utilisent des moyens de stockage et/ou d'alimentation au moins en partie communs avec des moyens de contrôle et/ou de stockage des contenus multimédia dudit conteneur.

39. Conteneur selon la revendication 37, **caractérisé en ce que** le ou les supports de communication actifs ou semi-passifs sont pilotés par des moyens de contrôle et/ou utilisent des moyens de stockage et/ou d'alimentation indépendants des moyens de contrôle et/ou de stockage des contenus multimédia stockés dans le conteneur.

40. Conteneur selon l'une quelconque des revendications précédentes, **caractérisé en ce qu'**il comprend en outre des moyens pour restituer du son.

41. Dispositif de chargement de contenu multimédia, comprenant des moyens pour recevoir un conteneur portable selon l'une quelconque des revendications précédentes, et des moyens pour charger dans ledit conteneur portable au moins un contenu multimédia

42. Dispositif de chargement selon la revendication 41, **caractérisé en ce qu'**il comprend en outre des moyens pour sélectionner au moins une proposition de condition d'exploitation d'un contenu multimédia disponible pour un chargement dans un conteneur portable.

43. Dispositif de chargement selon l'une des revendications 41 ou 42, **caractérisé en ce qu'**il comprend en outre des moyens pour charger dans ledit conteneur au moins une information en rapport avec des droits d'exploitation associés à au moins un contenu multimédia chargé.

44. Dispositif de chargement selon l'une des revendications 41 à 43, **caractérisé en ce qu'**il comprend en outre des moyens pour traiter des données d'identification d'un conteneur portable.

45. Dispositif de chargement selon l'une des revendications 41 à 44, **caractérisé en ce qu'**il comprend en outre des moyens pour copier tout ou partie des informations d'identification du conteneur dans une mémoire dudit conteneur qui est accessible à des moyens de gestion internes et/ou externes dudit conteneur.

46. Dispositif de chargement selon l'une des revendications 41 à 45, **caractérisé en ce qu'**il comprend en outre des moyens pour inclure tout ou partie des informations d'identification du conteneur et/ou de l'utilisateur dudit conteneur, dans au moins un fichier de contenu chargés dans ledit conteneur.

47. Dispositif de chargement selon la revendication 46, **caractérisé en ce que** les données d'identification incluses sont inscrites sous la forme d'étiquettes (tags) incluses dans au moins un fichier de contenu, en tant que métadonnées.

48. Dispositif de chargement selon l'une des revendications 46 ou 47, **caractérisé en ce que** des données d'identification incluses sont diffusées dans l'au moins un fichier de contenu par des techniques de filigrane électronique.

49. Dispositif de chargement selon l'une des revendications 41 à 48, **caractérisé en ce qu'**il comprend en outre des moyens pour bloquer l'arrimage d'un conteneur portable audit dispositif de chargement pendant une phase de chargement d'au moins un contenu multimédia.

50. Dispositif de chargement selon l'une des revendications 41 à 49, **caractérisé en ce qu'**il comprend en outre des moyens pour empêcher un accès à un conteneur portable connecté audit dispositif pendant une phase de chargement.

51. Dispositif de chargement selon l'une des revendications 41 à 50, **caractérisé en ce qu'**il comprend en outre au moins un câble pourvu d'un connecteur prévu pour être couplé à un connecteur de chargement d'un conteneur portable.

52. Dispositif de chargement selon l'une des revendications 41 à 51, **caractérisé en ce qu'**il est mis en oeuvre sous la forme d'un périphérique d'ordinateur raccordable à l'ordinateur par des moyens de connexion directs ou indirects standards..

53. Dispositif de chargement selon l'une des revendications 41 à 52, prévu pour pouvoir charger dans le conteneur connecté audit dispositif de chargement une licence associée à au moins un contenu chargé.

54. Dispositif de chargement selon l'une des revendications 41 à 53, prévu pour pouvoir coexister et le cas échéant partager des ressources avec des moyens de distribution automatique de contenus multimédia sur support physiques.

55. Dispositif d'adaptation connectable à un conteneur portable selon l'une quelconque des revendications 1 à 40 dans lequel est stocké au moins un objet multimédia, comprenant des moyens pour exploiter l'au moins un objet multimédia en association ou non avec un ou plusieurs équipements externes de restitution de contenu.

56. Dispositif d'adaptation selon la revendication 55, **caractérisé en ce qu'**il est réalisé sous la forme d'un ou plusieurs câbles de liaisons entre le conteneur portable et au moins un équipement externe de restitution de contenu.

57. Dispositif d'adaptation selon la revendication 55, **caractérisé en ce qu'**il est réalisé sous la forme d'une base d'accueil prévue pour effectuer une transmission de signaux entre des moyens de connexion équipant le conteneur portable et des moyens de connexion reliés à un ou plusieurs équipements de restitution de contenu.

58. Dispositif d'adaptation selon l'une des revendications 55 à 57, **caractérisé en ce qu'**il comprend en outre des moyens pour transformer les données stockées dans le conteneur en un flux analogique et/ou numérique adapté à au moins un équipement de restitution de contenu.

59. Dispositif d'adaptation selon l'une des revendications 55 à 58, **caractérisé en qu'**il comprend en outre des moyens pour exploiter des informations de cryptage associées au conteneur, de façon à décrypter un contenu multimédia protégé stocké dans ledit conteneur.

60. Dispositif d'adaptation selon l'une des revendications 55 à 59, **caractérisé en qu'**il comprend en outre des moyens pour exploiter des informations issues d'une horloge temps réel sécurisée embarquée dans le conteneur, pour la gestion de droits d'exploitation associés à des contenus multimédia.

61. Dispositif d'adaptation selon l'une quelconque des revendications 55 à 60, **caractérisé en ce qu'**il comprend en outre des moyens de visualisation et/ou d'écoute de contenus multimédia contenus dans un conteneur portable connecté audit dispositif d'adaptation.

62. Système pour transporter des contenus multimédia depuis un site fournisseur vers un site de consommation, comprenant :
- en un point de chargement associé audit site fournisseur, un dispositif de chargement prévu pour recevoir un conteneur portable multimédia et pour charger dans ledit conteneur portable au moins un contenu multimédia,
- en un point de restitution associé audit site de consommation, un dispositif d'adaptation prévu pour être connecté audit conteneur portable préalablement chargé et pour exploiter ledit contenu multimédia.

63. Procédé pour transporter des contenus multimédia depuis un site fournisseur vers un site de consommation, comprenant :
- une étape de sélection d'au moins un contenu multimédia parmi une pluralité de contenus multimédias disponibles depuis ledit site fournisseur
- en un lieu de chargement, une étape de chargement d'au moins un contenu multimédia et de ses éventuelles données annexes dans un conteneur portable numérique, et
- en un lieu de restitution, une étape d'adaptation des capacités du conteneur multimédia aux capacités d'un ou plusieurs équipements de restitution de contenu.

64. Application du procédé de transport selon la revendication 63, pour la diffusion d'informations, notamment à caractère promotionnel et/ou publicitaire, ces informations étant chargées dans des conteneurs portables selon l'une quelconque des revendications 1 à 40, puis affichées sur des supports d'affichage au sein desdits conteneurs portables.

65. Application selon la revendication 64, comprenant en outre une étape de restitution desdites informations à caractère promotionnel et/ou publicitaire sur des supports d'affichage au sein desdits conteneurs portables et le cas échéant par les moyens de restitutions du son embarqués.

66. Application selon la revendication 64, comprenant en outre une étape de restitution desdites informations à caractère promotionnel et/ou publicitaire avec les moyens de restitution disponibles au point de consommation.

67. Application selon l'une des revendications 64 à 66, comprenant en outre une étape de personnalisation desdites informations à caractère promotionnel et/ou publicitaire prenant en compte au moins une information en relation avec le client/utilisateur.

68. Application selon l'une des revendications 64 à 67, comprenant en outre une mise à jour d'images visualisées sur des supports d'affichage de conteneurs portables.

69. Application selon l'une des revendications 64 à 68, comprenant en outre un chargement de contenus à caractère promotionnel et/ou publicitaire dans la mémoire de masse du conteneur multimédia portable.

70. Application selon l'une des revendications 64 à 69, comprenant en outre un chargement de contenus à caractère promotionnel et/ou publicitaire dans la mémoire de masse embarquée dans le dispositif d'adaptation le cas échéant.

71. Application selon l'une des revendications 64 à 70, comprenant en outre une étape de diffusion de contenu à caractère promotionnel et/ou publicitaire dans le temps entre le moment du chargement de contenus multimédia et le moment de leur restitution.

72. Application selon l'une des revendications 64 à 71, comprenant en outre une étape de diffusion de contenus à caractère promotionnel et/ou publicitaire dans l'espace entre un lieu de chargement de contenus et le point de restitution.

73. Application du procédé de transport selon la revendication 63, pour recueillir des informations en rapport avec la consommation de contenus stockés dans un conteneur portable selon l'une des revendications 1 à 40, et/ou avec l'utilisation dudit conteneur portable, comprenant :
- une étape de collecte desdites informations dans une mémoire dudit conteneur portable en un point de consommation, et
- une étape de rapatriement des informations collectées dans un système d'information auquel un dispositif de chargement est connecté, lors d'une prochaine connexion dudit conteneur portable audit dispositif de chargement.

74. Application selon la revendication 73, dans laquelle les informations collectées et rapatriées dans le système d'information comprennent des informations relatives au comportement de l'utilisateur du conteneur portable et/ou à des réponses à des questions posées audit utilisateur.

75. Application du procédé de transport selon la revendication 63, pour proposer au moins un contenu multimédia non sollicité a priori par l'utilisateur comprenant :
- une étape de chargement silencieux desdits contenus non sollicités a priori et de leurs données annexes le cas échéant dans tout ou partie de l'espace résiduel de la mémoire du conteneur au delà de l'espace nécessaire au chargement des contenus multimédia sollicités par l'utilisateur et de leurs données annexes le cas échéant, et
- une étape de proposition à l'utilisateur d'au moins un des contenus multimédia non sollicités a priori.

76. Application selon la revendication 75, comprenant en outre une étape de sélection automatique de l'au moins un contenu multimédia non sollicité a priori par l'utilisateur prenant en compte au moins une information en relation avec le client/utilisateur.

77. Application selon l'une des revendications 75 ou 76, comprenant en outre une étape d'acceptation de l'au moins un contenu multimédia non sollicité a priori par l'utilisateur, cette acceptation conditionnant un acte économique.

78. Application selon l'une des revendications 75 à 77, comprenant en outre une étape d'interaction avec un système de gestion pour libérer la restitution d'un contenu protégé.

79. Application selon l'une des revendications 75 à 78, comprenant en outre une étape d'exposition à au moins un contenu à caractère promotionnel et/ou publicitaire pour libérer la restitution d'un contenu protégé.

80. Application selon l'une des revendications 75 à 79, comprenant en outre une étape de réponses à des questions posées audit utilisateur pour libérer la restitution d'un contenu protégé.

81. Application selon l'une des revendications 75 à 80, comprenant en outre une étape d'attente d'une date prédéterminée pour que la restitution d'un contenu protégé soit libérable.
